# EUROPEAN PATENT SPECIFICATION

(11) **EP 3 332 513 B1**
(45) Date of publication and mention of the grant of the patent: **16.06.2021**
(21) Application number: 16751431.4
(22) Date of filing: 03.08.2016
(51) Int. Cl.: H04L 12/28, H04L 12/54, H04L 12/46, H04L 12/725

(54) **SERVICE ELEMENT HOST SELECTION**
DIENSTELEMENT-HOSTAUSWAHL
SÉLECTION D'HÔTE D'ÉLÉMENT DE SERVICE

(30) Priority: 04.08.2015 US 201562200681 P
(43) Date of publication of application: 13.06.2018
(73) Proprietor: Convida Wireless, LLC, Wilmington, DE 19809-3727 (US)
(72) Inventor: DONG, Lijun, San Diego, CA 92130 (US); WANG, Chonggang, Princeton, NJ 08540 (US); LI, Xu, Plainsboro, NJ 08536 (US); RAHMAN, Shamim, Akbar, Cote St. Luc, Quebec H4V 1B8 (CA); LU, Guang, Thornhill, Ontario L4J9B6 (CA); CHEN, Zhuo, Claymont, DE 19703 (US); LY, Quang, North Wales, PA 19454 (US); STARSINIC, Michael, F., Newtown, PA 18940 (US)
(74) Representative: D Young & Co LLP
(86) International application number: PCT/US2016/045220
(87) International publication number: WO 2017/023957

(56) References cited:
- WO-A1-03/047186

## Description

### BACKGROUND

WO 03/047186 A1 relates to an access controller (AC) to a data network (N) including a set of boundary equipment (R1). The AC includes a receiver means for receiving quality of service requests associated with packet flows, a verification means for verifying whether said request can be fulfilled by internal resources of the network, and a transmission means for transmitting to the boundary equipment corresponding to the request, a message authorizing or inhibiting transmission of the associated packet flow.

### IoT Service

The Internet of Things (IoT) is a world where billions of devices can sense, communicate and share information, all interconnected over public or private networks. These interconnected devices have data regularly collected, analyzed, and used to initiate action, providing a wealth of services.

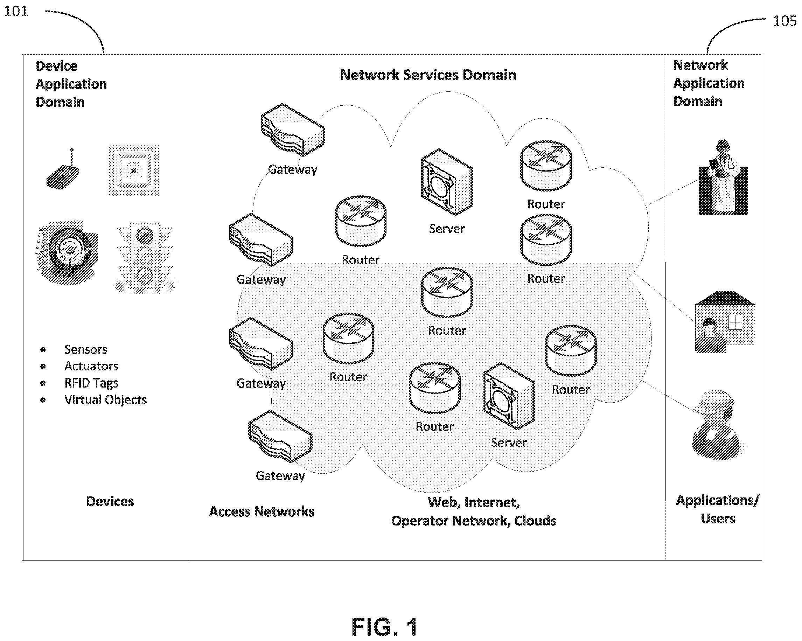

FIG. 1 illustrates a deployment of devices, gateways, routers and servers, as well as applications in an IoT system. Herein, the terms user, client, and application are used interchangeably, and refer to the entity that requests services. Clients can be in the format of applications (e.g., AE). You can install an application on your phone then access the service. The devices in device application domain 101 sense and collect data, which may be stored in devices themselves or in connected gateways in the access networks, as well as servers in the Internet, operator network, or clouds to provide services to applications or users in the network application domain 105.

### oneM2M Service Layer

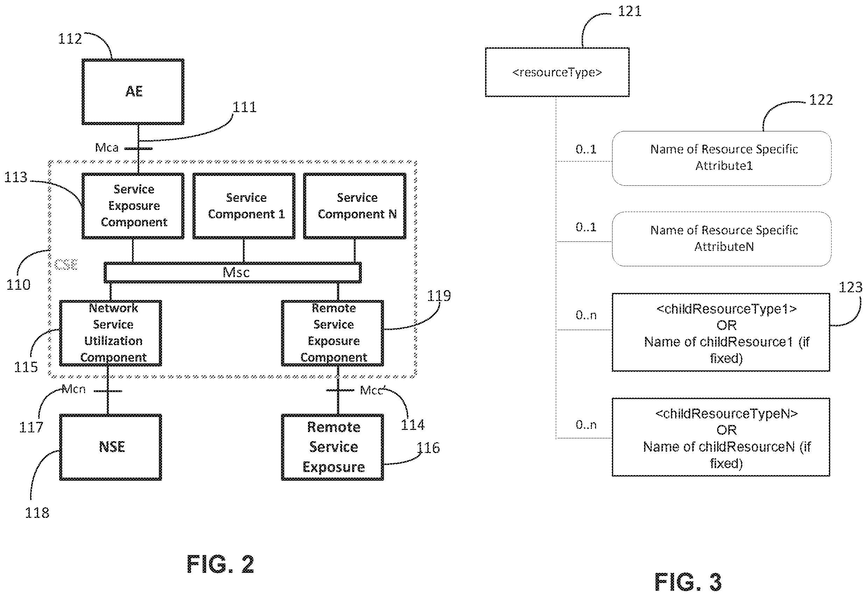

The oneM2M standard under development (oneM2M-TS-0001 oneM2M Functional Architecture-V-1.6.1, which is incorporated by reference in its entirety) defines a service layer (SL) called "Common Service Entity (CSE)." The SL provides "horizontal" services that can be utilized by different "vertical" machine-to-machine (M2M) systems and applications, such as e-Health, fleet management, and smart homes. As shown in FIG. 2, CSE 110 supports multiple reference points. Mca reference point 111 interfaces with the Application Entity (AE) 112. Mcc reference point (not shown) interfaces with another CSE within the same service provider domain and Mcc' reference point 114 interfaces with another CSE 116 in a different service provider domain. Mcn reference point 117 interfaces with the underlying network service entity (NSE) 118. NSE 118 provides underlying network services to the CSEs, such as device management, location services, and device triggering.

oneM2M architecture enables the application service node (ASN), application dedicated node (ADN), the middle node (MN), and the infrastructure node (IN). The ASN is a node that contains one CSE and contains at least one AE. An example of physical mapping is an ASN residing in an M2M Device. The ADN is a node that contains at least one AE and does not contain a CSE. An example of a physical mapping is an ADN residing in a constrained M2M device. An MN is a node that contains one CSE and contains zero or more AEs. An example of a physical mapping for an MN is an MN residing in an M2M Gateway. The IN is a node that contains one CSE and contains zero or more AEs. An example of a physical mapping for an IN is the IN residing in an M2M Service Infrastructure. There also may be a non-oneM2M node, which is a node that does not contain oneM2M Entities (neither AEs nor CSEs). Such nodes represent devices attached to the oneM2M system for interworking purposes, including management.

### Resource Structure in oneM2M

Entities in the oneM2M system (oneM2M-TS-0001 oneM2M Functional Architecture-V-1.6.1, which is incorporated by reference in its entirety), such as AEs, CSEs, data, etc. are represented as resources. A resource structure is specified as a representation of such resources. Such resources are uniquely addressable.

Resources are specified via a tabular notation as shown in FIG. 3 and as described in more detail below. The resources (e.g., resource 121) are specified in association with CSE 110. The resources are the representation in CSE 110 of the components and elements within the oneM2M System. Other CSEs, AEs, application data representing sensors, commands, etc. are known to CSE 110 by way of their resource representation. Resource 12 1 may be described as a uniquely addressable entity in oneM2M architecture. Resource 12 1 may contain child resources (e.g., child resource 123) and attributes (e.g., attribute 122). Child resource 123 may be defined as a sub-resource of another resource (resource 121) that is its parent resource. The parent resource (resource 121) contains references to the child resources. Attribute 122 stores information pertaining to the resource itself.

Graphical representations are used for representing the attributes and child resources. Square boxes are used for resources (e.g., resource 121 and child resource 123) and square boxes with round corners are used for attributes (e.g., attribute 122). Attributes in a *<resourceType>* may be as shown in FIG. 3. The attributes table for announce-able *<resourceType>* resource includes an additional column titled 'Attributes for *<resourceTypeAnnc>',* indicating the attributes that are to be announced for that *<resourceType>.*

**Table 1: Attributes of <resourceType> resource**

| **Attributes of *<resourceType*>** | **Multipli city** | **RW/ RO/ WO** | **Description** | ***<resourceTypeAn nc>* (MA/OA/NA)** |
|---|---|---|---|---|
| <Fill in name of Common Attribute 1> | <Fill in Multiplic ity> | <Fill in RW or RO or WO> | Provide description of this attribute - to be moved later to a common attribute clause. | <Fill in MA or OA or NA> |
| <Fill in name of Common AttributeN> | <Fill in Multiplic ity> | <Fill in RW or RO or WO> | Provide description of this attribute - to be moved later to a common attribute clause. | <Fill in MA or OA or NA> |
| <Fill in name of Resource Specific Attribute 1> | <Fill in Multiplic ity> | <Fill in RW or RO or WO> | Provide description of this attribute - to be moved later to a central attribute table that also defines the type of the attribute, allowed ranges etc. | <Fill in MA or OA or NA> |
| <Fill in name of Resource-Specific AttributeN> | <Fill in Multiplic ity> | <Fill in RW or RO or WO> | Provide description of this attribute - to be moved later to a central attribute table that also defines the type of the attribute, allowed ranges etc. | <Fill in MA or OA or NA> |

The access modes for *attributes* can assume values such as read/write (RW), read only (RO), and write once (WO). With regards to RW, the value of the attribute is set when the resource is Created or Updated based on information from the Originator (e.g., ***Content*** parameter). Such attributes are allowed for Create/Update/Retrieve/ Delete/Notify operations. For RO, the value of the attribute is set by the Hosting CSE internally. Such an attribute is allowed for retrieve operation only. And with WO, the value of the attribute is set when the resource is Created based on information from the Originator (e.g., ***Content*** parameter). Such an attribute is allowed for Retrieve operation after the creation.

The multiplicity, both for child resources and the attributes can have values with different associated meanings. A value of "0" indicates that the child resource/attribute is not present. A value of "1" indicates that the child resource/attribute is present. A value of "0..1" indicates that the child resource/attribute could not be present. If present, it can have an instance of one only. A value of "0..n" indicates that the child resource could not be present. If present, multiple instances are supported. A value of '1..n" indicates that the child resource is always present. It has at least one instance and can have multiple instances. An attribute multiplicity post-fixed with (L) indicates that it is a list of values.

The attributes for *<resourceTypeAnne>* in the attribute table can have the following set of values:
- MA (Mandatory Announced): The attribute in the original resource is announced to the announced resource. The content of such an announced attributes is the same as the content of the original attribute.
- **OA** (Optional Announced): The attribute in the original resource may be announced to the announced resource depending on the contents of the *announcedAttribute* attribute at the original resource. The content of such an announced attribute is the same as the content of the original attribute.
- **NA** (Not Announced): The original attribute is not announced to the announced resource.

### oneM2M Service Architecture

The M2M Service Architecture described in oneM2M Service Component Architecture, TS-0007 Service Component Architecture-V-0.7.0 (which is incorporated by reference in its entirety) augments the oneM2M Functional Architecture by specifying M2M Services provided to M2M Application and M2M Service Providers. As shown in FIG. 2, there may be multiple components, such as service exposure component 113, network service utilization component 115, and remote service exposure component 119. The service exposure component 113 exposes services to AEs. The network service utilization component 115 consumes services from NSE 118. Remote service exposure 116 connects services from different M2M environments.

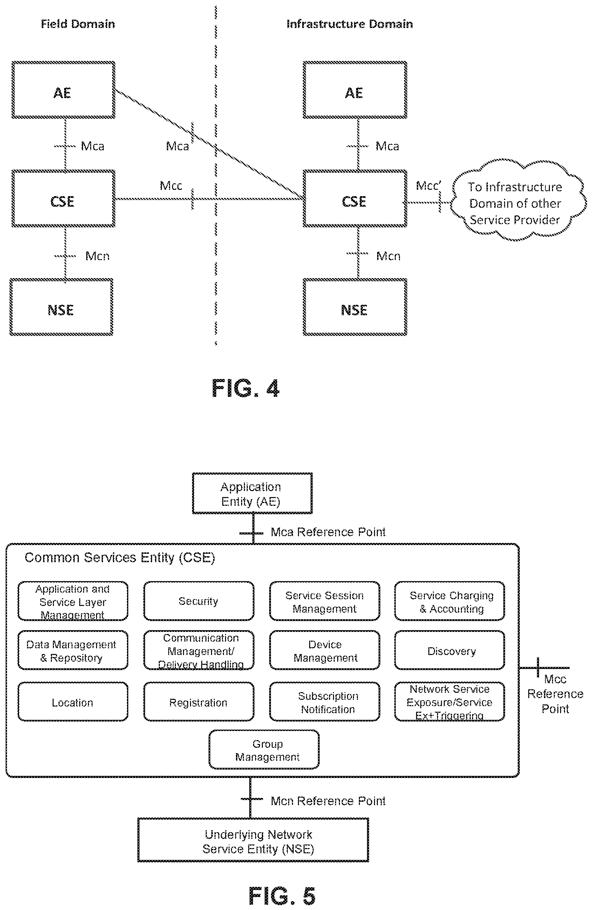

The oneM2M standard (oneM2M Functional Architecture) under development defines a service layer called common service entity (CSE), as illustrated in FIG. 4. The Mca reference point interfaces with an application entity (AE). The Mcc reference point interfaces with another CSE within the same service provider domain and the Mcc' reference point interfaces with another CSE in a different service provider domain. The Mcn reference point interfaces with the underlying network service entity (NSE). An NSE provides underlying network services to the CSEs, such as device management, location services and device triggering. CSE contains multiple logical functions called "Common Service Functions (CSFs)", such as "Discovery" or "Data Management & Repository." FIG. 5 illustrates example CSFs for oneM2M.

oneM2M architecture enables the application service node (ASN), application dedicated node (ADN), the middle node (MN), and the infrastructure node (IN). The ASN is a node that contains one CSE and contains at least one AE. An example of physical mapping is an ASN residing in an M2M Device. The ADN is a node that contains at least one AE and does not contain a CSE. An example of physical mapping is an ADN residing in a constrained M2M Device. An MN is a node that contains one CSE and contains zero or more AEs. An example of physical mapping for an MN is an MN residing in an M2M Gateway. The IN is a node that contains one CSE and contains zero or more AEs. An example of physical mapping for an IN is the IN residing in an M2M Service Infrastructure.

Below is additional context according to the oneM2M RESTful architecture. Capability service functions (CSFs) are represented as a set of "resources." A resource is a uniquely addressable entity in the oneM2M architecture. A resource has a representation that may be manipulated and transferred via RESTful methods such as Create, Retrieve, Update, and Delete (CRUD) and is addressed using a uniform resource identifier (URI). A resource may contain child resource(s) and attribute(s). A child resource is a resource that has a containment relationship with a parent resource. The parent resource representation contains references to its child resources(s). The lifetime of a child-resource may be limited by the parent's resource lifetime. Each resource may support a set of "attributes" that store information of the resource.

### SUMMARY

The invention is carried out as described n the apparatus claim 1, in the method claim 8 and in the computer-readable storage medium claim 15.

### BRIEF DESCRIPTION OF THE DRAWINGS

A more detailed understanding may be had from the following description, given by way of example in conjunction with the accompanying drawings wherein:
FIG. 1 illustrates an exemplary deployment of devices, gateways, routers and servers, as well as applications and users in an IoT system;
FIG. 2 illustrates an exemplary oneM2M services architecture;
FIG. 3 illustrates an exemplary <resourceType> representation convention;
FIG. 4 illustrates an exemplary oneM2M functional architecture;
FIG. 5 illustrates exemplary oneM2M Common Service Functions;
FIG. 6 illustrates an exemplary use case for a weather deducing service that includes the use of service elements;
FIG. 7 illustrates an exemplary network with service element hosts and clients;
FIG. 8 illustrates an exemplary message flow associated with a service, service element and host report (hereinafter S-SEaH report);
FIG. 9 illustrates an exemplary architecture of service host selection;
FIG. 10 illustrates an exemplary architecture of service host selection;
FIG. 11 illustrates an exemplary message flow of QoS based service request with service element host selection of FIG. 9 scenario;
FIG. 12 illustrates an exemplary message flow of QoS based service request with service element host selection of FIG. 10 scenario;
FIG. 13 illustrates an exemplary message flow of service element host reselection;
FIG. 14 illustrates an exemplary message flow of service element host reselection;
FIG. 15 illustrates an exemplary message flow of service request with multiple candidates of service element hosts;
FIG. 16 illustrates an exemplary scenario considering sequence of service elements;
FIG. 17 illustrates an exemplary scenario considering sequence of service elements;
FIG. 18 illustrates an exemplary oneM2M service element host selections common service function;
FIG. 19 illustrates an exemplary service request in oneM2M ROA;
FIG. 20 illustrates an exemplary resource structure of <serviceRequest>;
FIG. 21 illustrates an exemplary message flow of service, service element report, service request;
FIG. 22 illustrates an exemplary oneM2M service element host selection service component;
FIG. 23 illustrates an exemplary display that may be generated based on the methods and systems discussed herein;
FIG. 24A is a system diagram of an example machine-to-machine (M2M) or Internet of Things (IoT) communication system in which the disclosed subject matter may be implemented;
FIG. 24B is a system diagram of an example architecture that may be used within the M2M / IoT communications system illustrated in FIG. 24A;
FIG. 24C is a system diagram of an example M2M / IoT terminal or gateway device that may be used within the communications system illustrated in FIG. 24A; and
FIG. 24D is a block diagram of an example computing system in which aspects of the communication system of FIG. 24A may be embodied.

### DETAILED DESCRIPTION OF ILLUSTRATIVE EMBODIMENTS

Disclosed herein is the use of one or more service elements to provide a service, which may be used for the Internet of Things (IoT). Each service element may be provided by multiple devices or virtual devices (service element hosts). Discussed in more detail herein are concepts associated with the service layer, such as a service, service host, service element, and service element host. A service may be considered a set of actions, functions, or data that are of interest to clients and put in place to provide a set of outcomes and deliverables based on clients' input. An entity that requests services, which could be in the form of an application, may be considered a client. A service host is the entity that may announce a service and provide interfaces for clients to access the service. The service host may form the whole service from the service elements and deliver it to the origin of a service request. A service element may be considered an individual component that a service is made up of. A service element is usually data (e.g., data sensed from the physical world) used to provide the service. For example a service element may be temperature or blood sugar data. Lastly, a service element host may be defined as the physical host of a service element. There may be multiple and different service elements (e.g., temperature or humidity) located on one service element host.

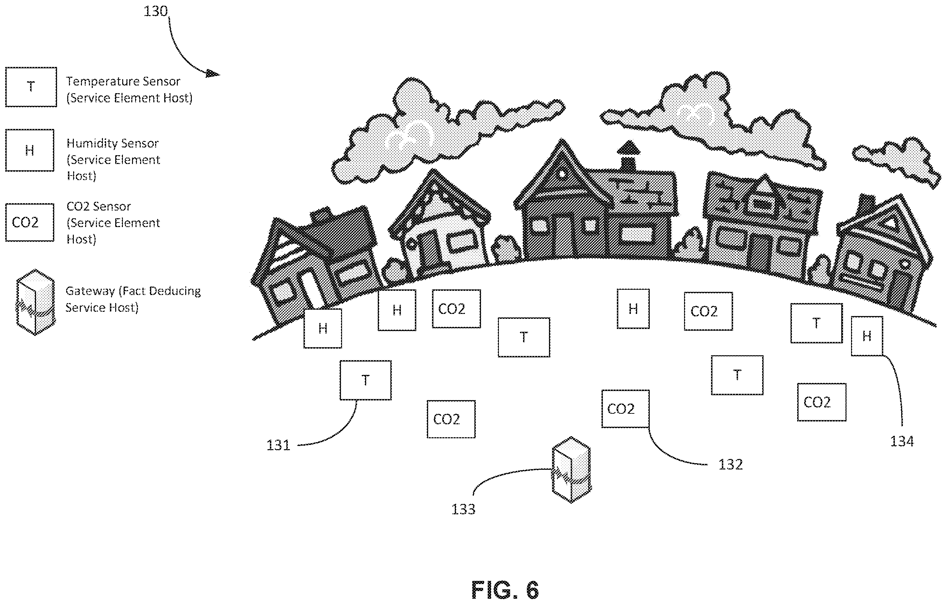

FIG. 6 illustrates a use case for a weather deducing service that includes the use of service elements. In FIG. 6, neighborhood 130 includes service elements (e.g., temperature, humidity, and CO2) and corresponding service element hosts, such as temperature sensor 131, humidity sensor 132, and CO2 sensor 134. Weather deducing service host 133 can generate deductions based on the collected data from various devices and provide the service to others.

For example, with reference to FIG. 6, a deduction could be whether it is a pleasant day in neighborhood 130, which may be based on the temperature, humidity, and CO2 (e.g., air pollution) data collected by various sensor devices deployed in neighborhood 130. As shown in FIG. 6, the various sensor devices are deployed in neighborhood 130 for sensing each of the parameters, e.g. temperature, humidity, and CO2. This particular weather deducing service has a gateway 133 that is the service host. The weather deducing service has three service elements, each of which has multiple hosts. Herein, it is assumed that applications and the like have a registration relationship with the service host (e.g., weather deducing service host 133) and service element host (e.g., temperature sensor 131 or humidity sensor 132) such that they are allowed to request service elements with the proper access rights.

Conventionally, there is lack of functionality to support a service (as defined herein) composed of multiple service elements. The conventional service layer (e.g., oneM2M service layer) does not have this concept of a service, and it does not support the scenarios that a service may be composed of multiple service elements. The conventional service layer has many resources defined, but these only store data that are collected from the physical world. A client would be able to retrieve that data and process it locally. In addition, the conventional service layer does not provide the methods to process and maintain the information of a service, which can be composed of multiple service elements. Without such methods, a service cannot be discovered or used at the service layer.

A service, as discussed herein, determines information based on data gathered by service elements (it does NOT just store the data, as is done with conventional service layers). Service disclosed herein may use data provided by sensing the physical world. This new service can be provided by the service layer, which enables the service to be discovered and used by a client. The service disclosed herein, for example with reference to FIG. 6, may deduce whether it is pleasant or whether it is pleasant in relation to neighborhood 130. Another example is associated with blood pressure data. A service may be provided that determines if a person is in good health or if any medication is needed.

Clients (e.g., applications or the like) that receive service elements (e.g., temperature, humidity, and CO2 data), may receive them from different combinations of sensor devices (e.g., service element hosts), and may make deductions based on their own definitions associated with a level user's of comfort on weather and environment conditions (e.g., minimum threshold of data associated with one or more service element used to provide an acceptable determination/deduction). In another example, the service host (e.g., gateway 133) may determine the global level of comfort based on the service elements received from different sensor devices. The global level of comfort may be, for example, associated with all or substantially all the services by that service host or a group of service hosts.

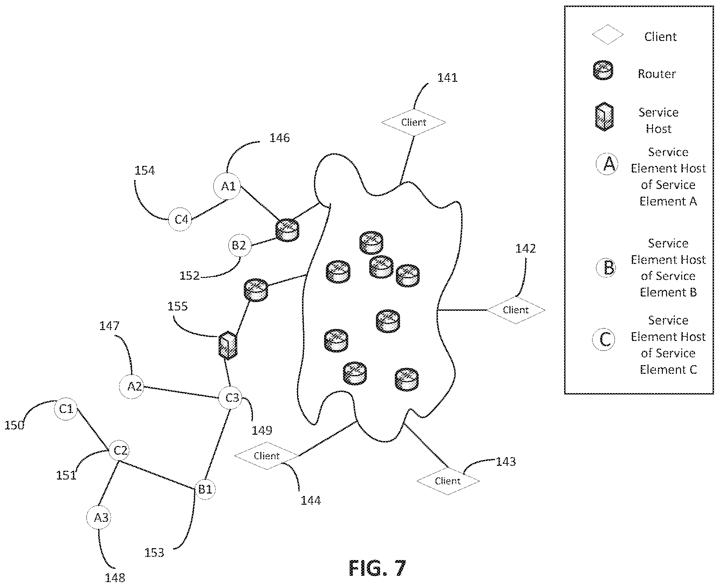

Clients may request a service from different physical locations connected to a network through routers as shown in FIG. 7. In an example, each of the clients (e.g., client 141, 142, 143, or 144 in FIG. 7) may have its own quality of service (QoS) requirement for receiving the service. The QoS could be shortest gross distance, minimum overall response time, etc. In FIG. 7, service host 155 may be on a gateway, as an example. As shown, there are three service elements for this service: Service element A, B, C as follows:
- Service Element A has Service Element Host 146, 147, and 148
- Service Element B has Service Element Host 152 and 153
- Service Element C has Service Element Host 149, 150, 151, and 154

If client 141 and client 144 send a request with QoS of shortest gross distance, then it is optimal for service element host 146, 152, and 154 to provide service element A, B, and C to client 141. With regard to client 144, it is optimal for service element host 147, 153, and 149 to provide service element A, B, and C. In another example, if client 151 and client 149 send the request with QoS of minimum overall response time, it is optimal for service element host 146, 152, 149 to provide service element A, B, C to client 142 and client 143 (assuming for this example they have the least response time compared to other peer service element hosts).

It may be significant that a service request is responded to with consideration of the QoS requirement in the request. Conventional systems could not efficiently use and select service elements because they may not understand that a service may be composed of multiple service elements hosted in multiple/different service element hosts, as well as not understanding the relevant context information. Conventional systems are not well supported and do not operate to find the best service element hosts to satisfy the QoS requirement from the client as discussed herein. Currently, there is lack of a service element host selection function that can take these factors as discussed herein into consideration.

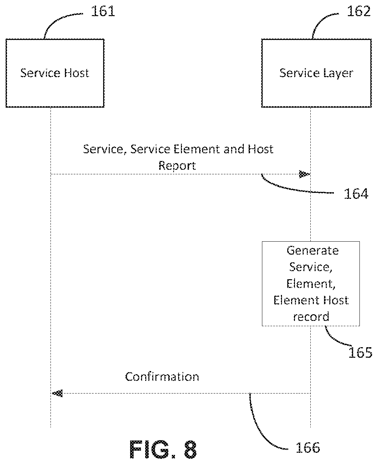

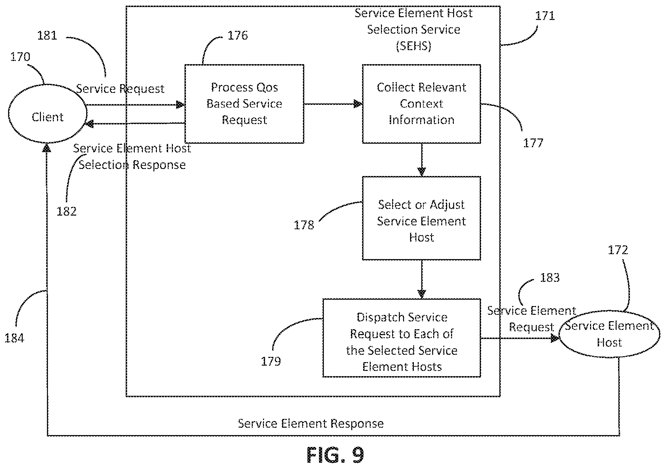

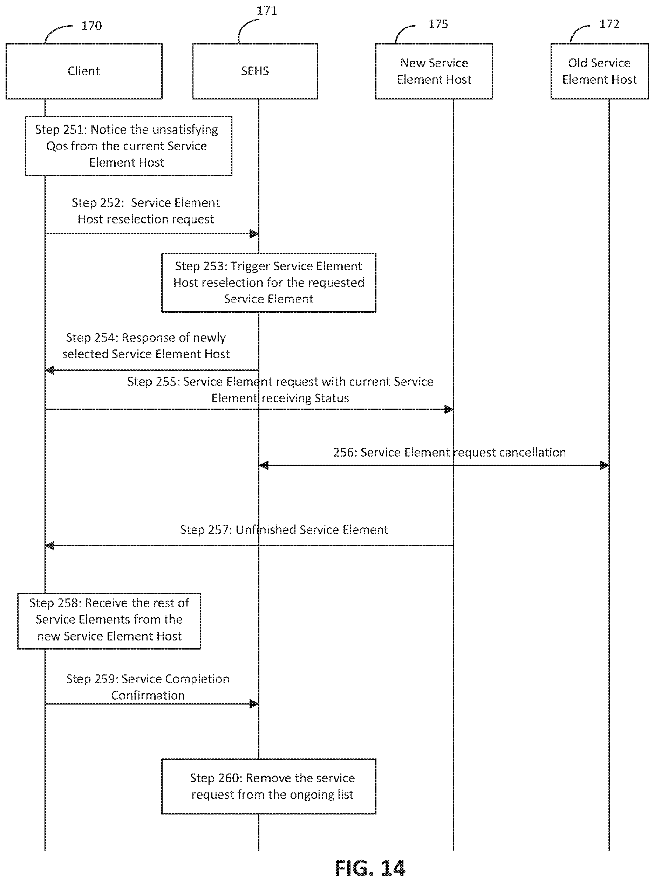

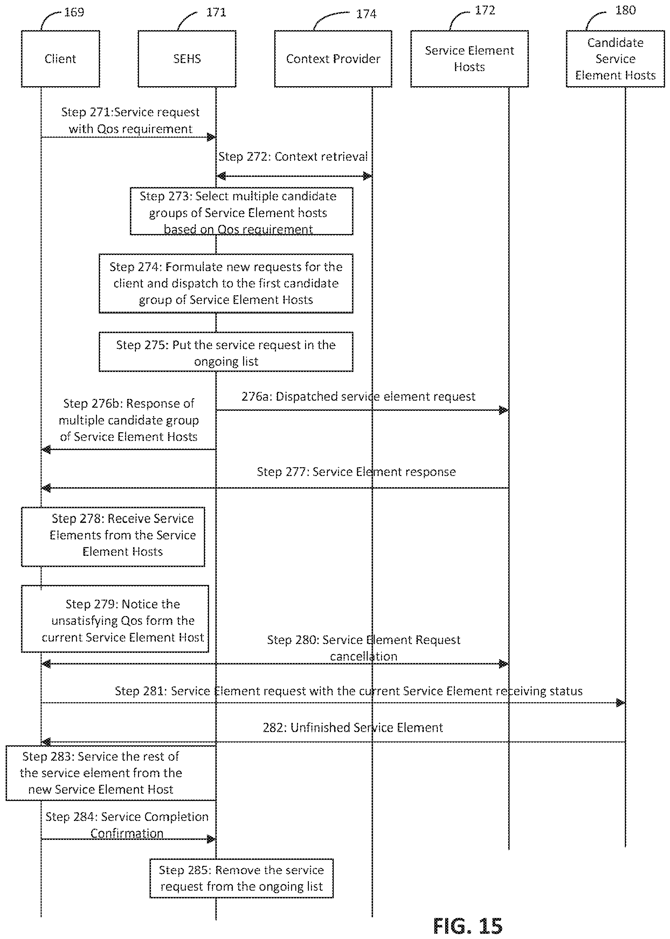

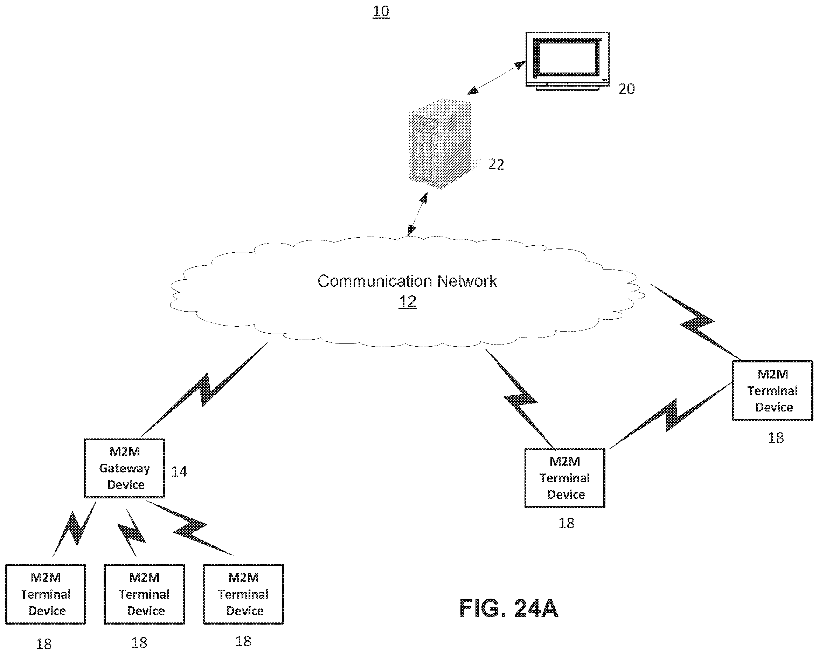

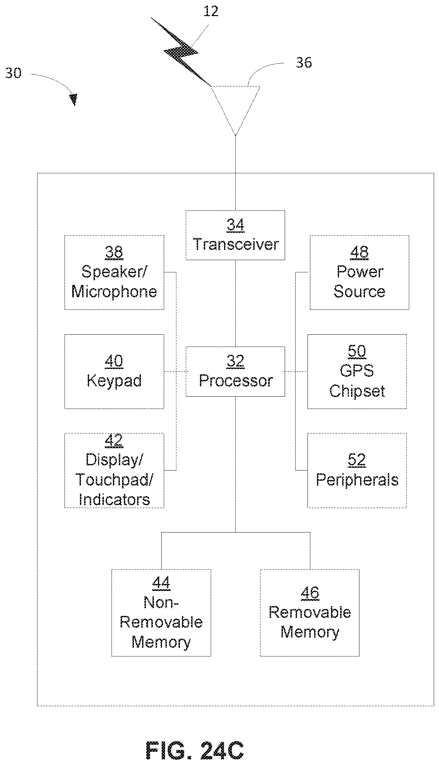

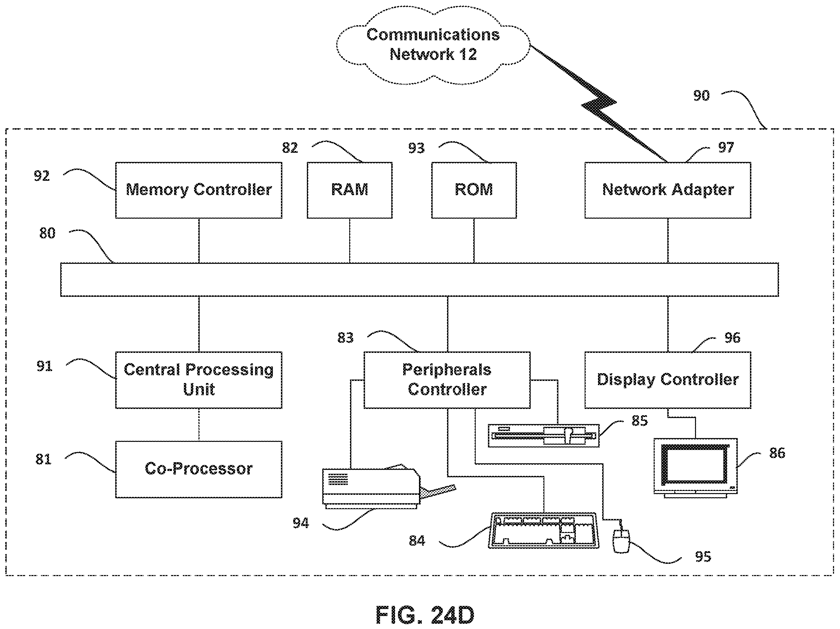

Disclosed below are ways for a service layer to provide the capabilities to support a service with multiple service elements, in addition to oneM2M examples implemented using oneM2M for the proposed concepts. It is understood that the entities performing the steps illustrated in FIG. 9 FIG. 15, among others, are logical entities that may be implemented in the form of software (e.g., computer-executable instructions) stored in a memory of, and executing on a processor of, a device, server, or computer system such as those illustrated in FIG. 24C or FIG. 24D. That is, the method(s) illustrated in FIG. 9 FIG. 15, among others, may be implemented in the form of software (e.g., computer-executable instructions) stored in a memory of a computing device, such as the device or computer system illustrated in FIG. 24C or FIG. 24D, which computer executable instructions, when executed by a processor of the computing device, perform the steps illustrated in FIG. 9 -FIG. 15, among others. In an example, with further detail below with regard to the interaction of M2M devices, service host 161 of FIG. 8 may reside on M2M gateway device 14 of FIG. 24A, while client 170 of FIG. 14 may reside on M2M device 18 of FIG. 24A.

FIG. 8 illustrates an exemplary message flow associated with a service, service element and host report (hereinafter S-SEaH report). Service layer 162 takes input of such S-SEaH report to build service, service element, and service element host record for each service. As discussed herein a service is composed of one or more service element(s). Each service and each service element may be assigned a serviceID or an elementID, respectively.

With reference to FIG. 8, at step 164 service layer 162 receives a S-SEaH report message, which may be from service host 161. Table 1 provides an example of what may be contained in a S-SEaH report message, particularly when a new service is available.

**Table 1: Service, Service Element and Host Report Message**

| | | | | | |
|---|---|---|---|---|---|
| serviceID | numOfElement | elementID | numOfElementHost | listOfElementHost | serviceElementOrder |

The S-SEaH report message may include a serviceID, numOfElement, elementID, numOfElementHost, listOFElementHost, and serviceElementOrder, among other things. A serviceID is the identifier that can represent and differentiate a service. A serviceID may be assigned by a central point such as the service directory such that each service has a unique identifier. As an example, the servicelD may include the description of the service as well as some labels that differentiate it from others, or it could be a URI, etc. numOfElement indicates the number of the service elements that the service is composed of. Following the numOfElement field may be the service element with its identifier, number of element host, and corresponding host identifiers, as shown. The numOfElement field may be obtained from the number of elementIDs contained in the S-SEaH report message of step 164.

elementID is the identifier that can represent and differentiate the service element within this service. The elementID may be extended from the serviceID. With reference to Table 2, a service has a serviceID of DeduceService1, which has 3 service elements. The elementIDs are extended from the serviceID, which are DeduceService1.temperature, DeduceService1.humidity, and Deduce Service1.air. numOfElementHost indicates the number of element hosts for each service element. The numOfElementHost field may be deduced by considering the listOfElementHost field.

listOfElementHost contains a list or other indicator of service element hosts for each service element. After numOfElement, in one example, there may be multiple combinations of elementID, numOfElementHost, listOfElementHost that follow. The service element hosts are known and updated to the service host by the service element host registering to the service host or discovered by the service host. serviceElementOrder considers the factor (e.g., an indicator) of service elements' sequence in requesting a In other words, the service elements of a service may have predetermined orders that should be received by clients in order to get the full service. If there is no such order requirement, then this field can be left out of the S-SEaH report message, or otherwise indicated within the S-SEaH report Like other fields, serviceElementOrder may be retrieved or provided to clients.

Table 2 illustrates an exemplary S-SEaH record that may be derived from the message. It could also be an example of what could be displayed on a display interface (e.g., display/touchpad 42) for a S-SEaH record or report message. The serviceElementOrder is not shown in Table 2, because, in this instance, it is not needed. It should be understood that identifiers contained in this record of Table 2, and throughout, for a service, service element, and element host are for illustration purposes, and may be in other possible forms, e.g. IP address, MSISDN, or IMSI.

With continued reference to FIG. 8, at step 165, service layer 162 generates the S-SEaH record, which may be similar to what is shown in Table 2. The S-SEaH record of Table 2 is based on S-SEaH report message, such as the message provided at step 164 from service host 161. Service layer 162 may appropriately share or publish the DeduceService1. So service layer 162 will have and may publish a service resource that has the attributes to maintain the information of Table 1. Service layer 162 may (in some instances) just send update information, which may add or subtract service elements, etc. At step 166, service layer 162 sends a message to service host 162. The message of step 166 may indicate that the record has been successfully created for the service (or unsuccessful for reasons such as incomplete or conflicting information).

For further clarification with regard to service layer 162 and service host 161, service host 161 mainly knows about the service (e.g., DeduceService1). So service host 161 which has a DeduceService1 may want to publish DeduceService1 to service layer 162. Because of the functionality provided by service layer 162, clients may discover DeduceService1 (and other services) of service host 161. Service layer 161 can manage the information of the service (e.g., DeduceService1) so that the services provided by service host 161 can be discovered and then used by a client.

**Table 2: Service, Service Element and Service Element Host Record**

| Service ID | Number of Service Elements | Service Element ID | Number of Service Element Hosts | Service Element Host (list of service elements) |
|---|---|---|---|---|
| DeduceService1 | 3 | DeduceService 1.temperature | 3 | tempSensor1, tempSensor2, tempSensor3 |
| | | DeduceService 1.humidity | 2 | humidity Sensor1, humiditySensor2 |
| | | DeduceService1.air | 4 | airSensor1, airSensor2, airSensor3, airSensor4 |

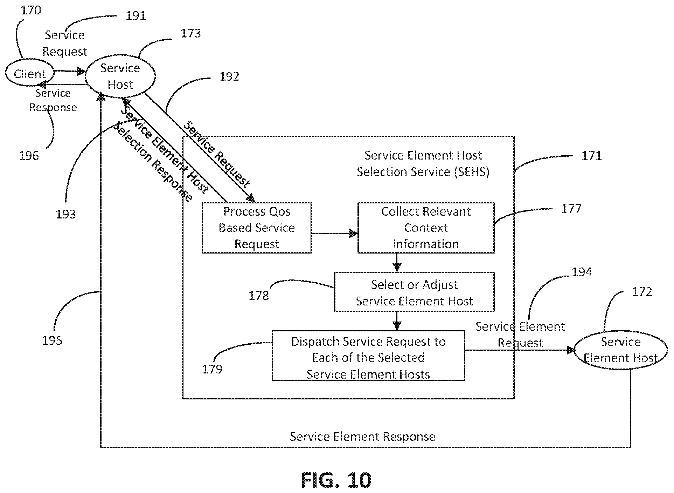

Disclosed herein are the functionalities of service element host selection service (SEHS). FIG. 9 and FIG. 10 each show separate scenarios for SEHS. To summarize a first scenario, a client may send the QoS-based service request to SEHS. SEHS processes the request, selects the appropriate service element hosts based on the client's QoS, and dispatches the service element request to the service element hosts. Summarizing the second scenario, a client can send the QoS-based service request directly to the service host, which in turn forwards the request to SEHS. This scenario happens if the client resides in a resource constrained device that may not have the capability to piece the service elements from different service element hosts together to form the whole service and relies on the service host to take care of it. Similarly, SEHS processes the request, selects the appropriate service element hosts based on the client's QoS, and dispatches the service element request to the service element host. Both scenarios are discussed in more detail herein.

In more detail, in the first scenario, as shown in FIG. 9, at step 181, SEHS 171 receives a service request, which may be indicative of being from client 170. At step 182, SEHS 171 sends a service element host selection response to client 170, which may inform the client 170 of all selected service element hosts. Within SEHS 171, there may be processing of QoS based on the service request (block 176), collecting/determining of relevant context information (block 177), selecting/adjusting of a service element host, and dispatching of service requests to each of the selected service element hosts. At step 183, SEHS 171 sends a service element request to service element host 172. At step 184, client 170 receives a service element response, which is indicative of being from service element host 172; the response in 184 may include the service result or content (e.g. temperature value if the service element host is a temperature sensor node) corresponding to what client 172 has requested.

In a second scenario, as shown in FIG. 10, at step 191, service host 173 receives a service request, which may be indicative of being from client 170. At step 192, service host 173 sends the request of step 191 to SEHS 171. At step 193, service host 173 receives a service element host selection response, which may include the selected service element hosts, indicative of being from SEHS 171. Within SEHS 171, there may be processing of QoS based on the service request (block 176), collecting/determining of relevant context information (block 177), selecting/adjusting of a service element host, and dispatching of service requests to each of the selected service element hosts. At step 194, service element host 172 receives a service element request indicative of being from SEHS 171. At step 195, service host 173 receives a service element response, which is indicative of being from service element host 172; the response in 195 may include the service result or content (e.g., temperature value if the service element host is a temperature sensor node) corresponding to what service host 173 has requested. At step 196, service host 173 sends a service response to client 170; the response in 196 may include the service result or content from all service elements individually or combined/aggregated.

In either of the scenarios illustrated by FIG. 9 and FIG. 10, a QoS requirement may be optional in the service request. Service host 173 or SEHS 171 may decide the QoS requirement for client 170 based on the characteristics of the requested service or other factors. Service host 173 may provide the QoS requirement to SEHS 171 or the QoS requirement could be provisioned in SEHS 171.

In both scenarios, SEHS 171 may operate in a similar manner. When SEHS 171 receives a service request, the "Process Qos Based Service Request" of block 176 may parse the request message (e.g., step 181 or step 192) and receive input from "Collect Relevant Context Information" of block 177 for the appropriate context information. The "Select or Adjust Service Element Host" of block 178 is in charge of selecting or reselecting service element hosts 172 based on the request message and the collected context information. After service element hosts 172 are selected or reselected, the "Dispatch Service Request to Each of the Selected Service Element Hosts" of block 179 is in charge of dispatching the request.

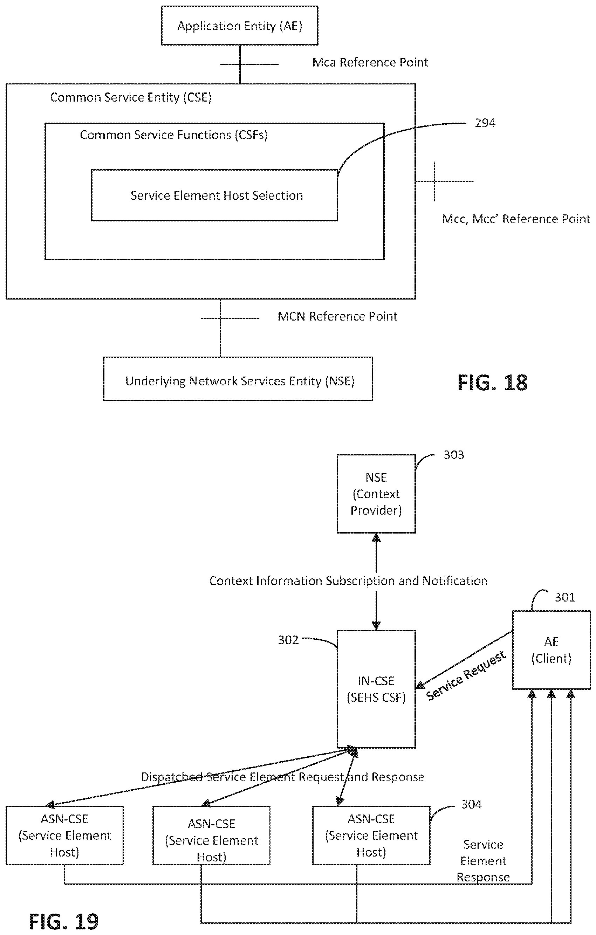

Discussed below are more details of interactions for SEHS 171. Below are examples of the message structure, the message content, and the messaging flow associated with SEHS 171. Client 170 may send a service request (e.g., step 181) by getting access through an attached router, gateway, base station, or the like (later proxy router or proxy gateway is used for presentation simplicity). The router may act as the proxy to send service requests for the clients to SEHS 171 or service host 173 (SEHS 171 can regard the router as the service request's originator). In an example, SEHS 171 may reside in a CSE as a CSF, as shown in FIG. 19. SEHS 171 having knowledge of the proxy router's address may assist in retrieving context information from the router such as the distance from the router to the service element hosts 172. For this example, distances from the router to service element hosts 172 may be considered equivalent to distances from client 170 to service element hosts 172, when doing a comparison. An exemplary service request message (e.g., step 181) is shown in Table 3.

**Table 3: Service Request Message**

| | | | |
|---|---|---|---|
| client's address | proxy's address | serviceID | QoS Requirement |

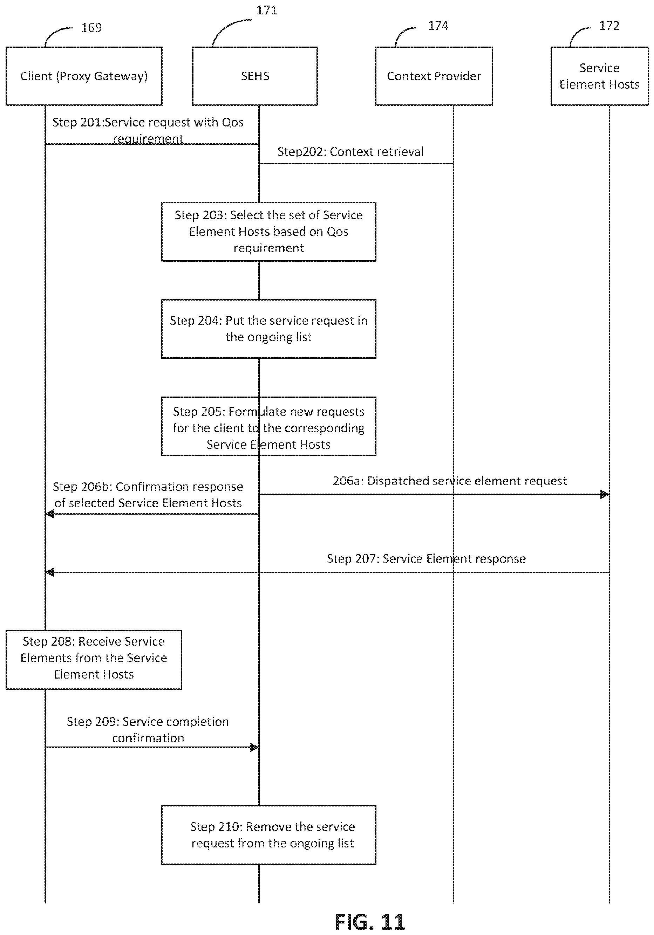

Client's address in Table 3 is the address of the client 170 who is requesting the service. For the first scenario summarized by FIG. 9, proxy's address of Table 3 is the address of the proxy gateway (e.g., proxy gateway 169 of FIG. 11) of client 170, which may connect client 170 to a network like the Internet. The address of proxy gateway 169 may not be known to client 170 initially. Proxy gateway 169 may reformulate the request message of client 170 by adding its own address. It is assumed that proxy gateway 169 may inspect the request message to add its own address. For the second scenario, proxy's address of Table 3 is reset by service host 173 for proxy gateway 169 to be the service host 173 itself, which is discussed in more detail herein. serviceID of Table 3 is the identifier of the service that client 170 is requesting. It is contemplated that before client 170 requests a service, it may discover the service from a service directory, which may reside in a CSE in oneM2M architecture, for example, and stores the metadata and semantics of services. The QoS requirement of Table 3 is the QoS that client 170 wants from service host 173. Although the term "requirement" is used, here it is contemplated that QoS options may be prioritized and implemented based on the priority as conditions and priority allow. SEHS 171 may maintain a list of QoS requirements that it is able to parse and understand. This list may be learnt (e.g., patterns determined) and updated constantly based on the requests of client 170. Examples may include the following: the shortest gross distance, length of cables between devices, least delay, least response time, reliability, least sleep time period, etc. Client 170 may have multiple QoS request that may be considered together. In the following, shortest gross distance is used as an example for illustration purposes. Shortest gross distance may be generally defined for these examples as the sum of the distances from proxy gateway 169 to the service element hosts 172.

FIG. 11 illustrates an exemplary message flow of SEHS based on a first scenario as summarized by FIG. 9. At step 201, SEHS 171 may receive a service request with QoS requirement as shown in Table 3. The service request of step 201 may be indicative of being from proxy gateway 170. Taking the service shown in Table 2 as an example, the address of client 170 is the address of client 170 itself, the proxy's address is the address of the router attached with client 170, the serviceID is set to be "DeduceService 1," the QoS requirement is set to shortest gross distance. As an example, the service request of step 201 may be subscription requests to each of the individual service elements. This example will be used herein for illustration purposes.

With continued reference to FIG. 11, at step 202, there is context retrieval by SEHS 171. SEHS 171 retrieves the relevant context information in order to make the selection of the service element host. SEHS 171 may retrieve the context information from context provider 174. SEHS 171 may send the context request message as shown in Table 4. Context provider 174 may be the proxy gateway 169. In an example, the context field of Table 4 may indicate that SEHS 171 requests the distance information from the requestor (e.g., proxy gateway 169) to the service element hosts 172. The list of service element hosts 172 are contained in a field of Table 4. In an example, proxy gateway 169 as a content provider 174 may acquire the context information based on one or more of the following: location of devices (e.g., GPS), routing table of proxy gateway 169, and other tools such as ping, traceroute. Context provider 174 returns the determined distance from proxy gateway 169 to the listed service element hosts. In an example, SEHS 171 may cache context information from previous transactions and therefore may not request context information from context provider 174. The retrieved context information may be as shown in Table 5.

**Table 4: Context Retrieval Message for Distance Information**

| | |
|---|---|
| context | List of all Service Element Hosts |

**Table 5: Distance Context Information**

| Service Element ID | Service Element Host | Distance from the proxy router |
|---|---|---|
| service1.temperature | tempSensor1 | 5 |
| | tempSensor2 | 6 |
| | tempSensor3 | 7 |
| service1.humidity | humiditySensor1 | 8 |
| | humiditySensor2 | 5 |
| service1.air | airSensor1 | 6 |
| | airSensor2 | 4 |
| | airSensor3 | 5 |
| | airSensor4 | 5 |

With continued reference to FIG. 11, at step 203, SEHS 171 may select the set of service element hosts based on the QoS requirement and the acquired context information. In this example based on Table 5, SEHS 171 selects "tempSensorl," "humiditySensor2," and "airSensor2," as service element hosts 172 that provide each of the three service elements of service "DeduceService1" to client 170, because they have the shortest gross distance to client 170. At step 204, SEHS 171 puts the original service request of step 201 in an ongoing service list. At step 205, SEHS 171 formulates a service element request for client 170, which will be dispatched to each of the selected service element hosts 172. In the service element request generated in step 205, the address of client 170 may be included such that service element hosts 172 know where to send the service element.

With continued reference to FIG. 11, at step 206a, SEHS 171 dispatches a service element request to the selected service element host 172 on behalf of client 169. SEHS 171 may include the address of client 170, serviceID from the service request of step 201, and corresponding serviceElementID for service element host 172 in the dispatched request message. SEHS 171 may be a common point of trust between client 170 and service element hosts 172. The service element request message of step 206a or 201 may include a security credential that may be used when communicating with client 170. At step 206b, SEHS 171 sends a message that may include a confirmation and the selected service element host 172 for each service element contained in the requested service. Security keys may be included in the message of step 206b to establish secure communication between service element host 172 and client 170. In addition, SEHS 171 may store the selected service element hosts 172 that correspond to the same service and proxy gateway as shown in Table 6. The aforementioned may be helpful in the following situation. For example, if another client (not shown) uses the same proxy gateway 169 as client 170 to send a service request for the same service with the same QoS requirement, SEHS 171 may not need to carry out step 202 and step 203. SEHS 171 may use the already selected service element hosts 172 to dispatch the requests and other associated messaging.

**Table 6: Selected Service Element Host History**

| serviceID | requestOrigin | selectedServiceElementHost | expirationTime |
|---|---|---|---|
| DeduceService1 | proxy router's address | tempSensor1, humidity Sensor2, airSensor2 | 1 hour |

With continued reference to FIG. 11, at step 207, proxy gateway 169 receives a service element (e.g., data associated with a service element) associated with step 201. The message of step 207 may be indicative of being from service element hosts 172. At step 208, proxy gateway 169 may check the received messages from each service element host 172 and determine whether the threshold amount of service elements has been received. At step 209, after determining that the threshold amount of service elements has been received by proxy gateway 169, it may send a service completion message to SEHS 171. At step 210, SEHS 171, may remove the service request from the ongoing list, which is indicative that the service request of step 201 has been completed.

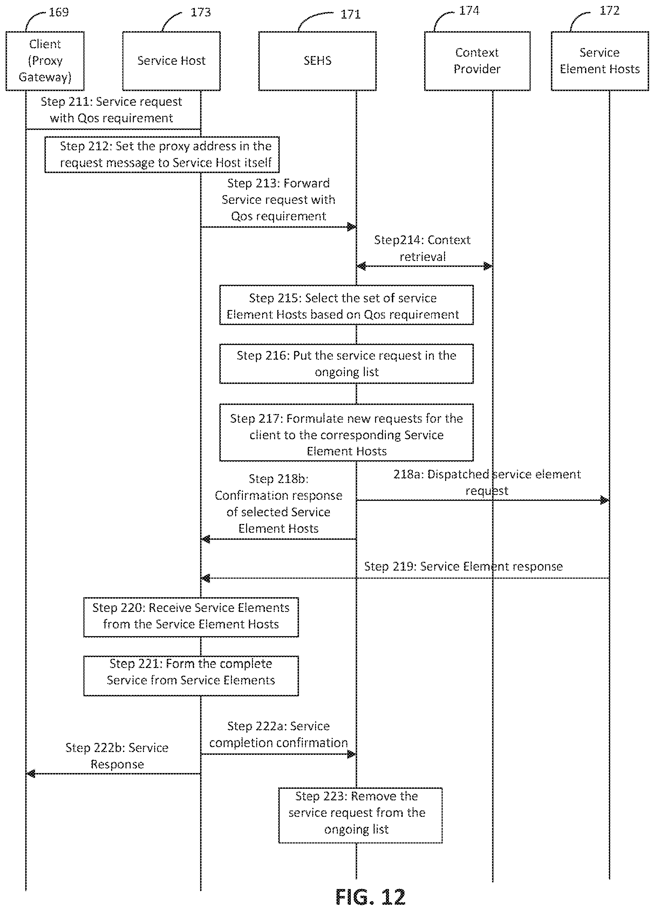

FIG. 12 illustrates an exemplary message flow of SEHS based on a second scenario as summarized by FIG. 10. At step 211, service host 173 receives a service request as shown in Table 3 with a QoS requirement. The service request may be indicative of being from service host 173. At step 212, service host 173 resets the proxy address in the request message from proxy gateway 169 to itself (service host 173), such that service element hosts 172 sends the service element to service host 173. At step 213, service host 173 forwards the service request of step 211 to SEHS 171. Step 214 to 218a are similar to the step 202 to step 206a of FIG. 11. Step 218b of FIG. 12 is similar to step 206b of FIG. 11, except in step 218b SEHS 171 sends the confirmation to service host 173.

With continued reference to FIG. 12, at step 219, service host 173 receives a service element associated with step 211. At step 220, service host 173 may check the received messages from each service element host 172 and determine whether the threshold amount of service elements has been received. At step 221, service host 173 forms the complete service from the received service elements of step 219 when the threshold amount is received. For example, for the deducing service of FIG. 6, the service is formulated by deducing from the received temperature, humidity, and CO2 data. At step 222a, after determining that the threshold amount of service elements has been received by service host 173, it may send a service completion message to SEHS 171. At step 222b, service host 173 sends the whole service to proxy gateway 169. At step 223, SEHS 171 removes the service request from the ongoing list. The removal may be indicative of the service request of step 211 has been completed. Since other clients (not shown) may send requests to the service host 173, which acts as the proxy for the other clients, the service element selection may only happen once barring a major event (e.g., power cycle, errors, thresholds crossed, etc..) for the service requests with the same QoS requirement.

Service element host reselection may happen at SEHS 171 due to context change which may include client's dissatisfaction (e.g., not meeting a minimum threshold) of the service provided by the currently selected service element hosts 172. An example for service element host re-selection is discussed below. Although the example is in the context of the first scenario of FIG. 9, the service element host re-selection is also applicable to other scenarios, such as the second scenario of FIG. 10. Also, it is possible that there are factors other than the ones provided herein that may trigger SEHS 171 to reselect service element hosts, which can be taken care of by SEHS 171.

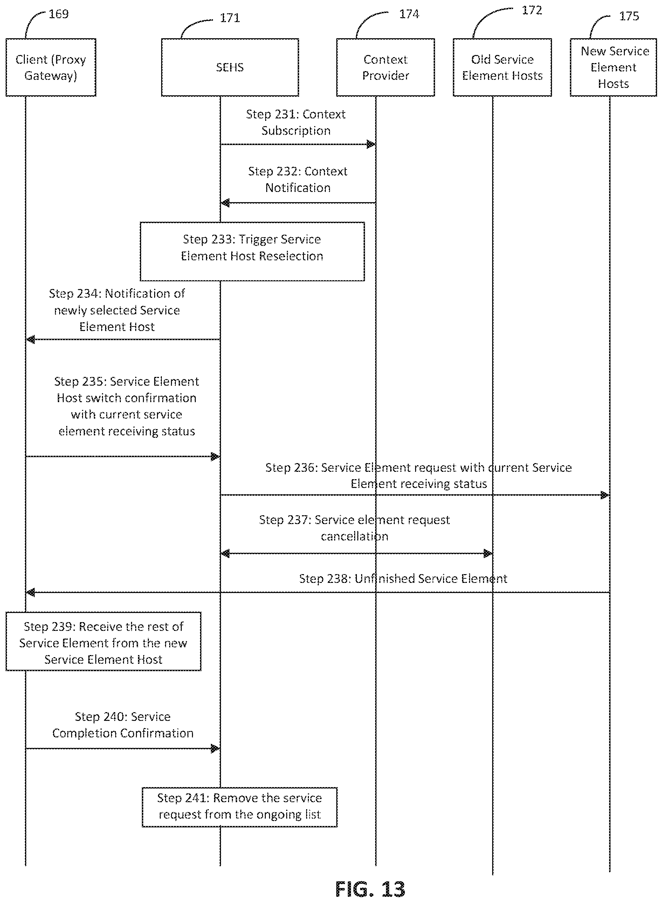

FIG. 13 illustrates an exemplary message flow of service element host reselection based on a change of context. At step 231, SEHS 171 subscribes to the interested context provided by context provider 174. There is different context information that may be considered by SEHS 171. For example, SEHS 171 may subscribe to information associated with battery of service element host 172 based on a QoS requirement of reliability. SEHS 171 may be notified if a threshold for battery power is met. An example, with regard to distance between devices, may be the context requested for the flow of FIG. 13. SEHS 171 may subscribe to context information for the distance from proxy gateway 169 to service element hosts 172. At step 232, SEHS 171 receives a message for notifying of a change in context. The message of step 232 may be indicative of being from context provider 174. In an example, the distance from the proxy gateway 169 to the service element host "humiditySensor1" is 3. The distance of 3 shown in Table 7 may have decreased from another number, such as 7.

**Table 7: Distance Change**

| Service Element ID | Service Element Host | Distance from the proxy router |
|---|---|---|
| service1.humidity | humidity Sensor1 | 3 |
| | humiditySensor2 | 5 |

With continued reference to FIG. 13, at step 233, the change of humiditySensor1 distance to 3 triggers SEHS 171 to perform service element host reselection for the relevant ongoing service or the service stored in the selected service element host history as shown in Table 6. SEHS 171 may select "humiditySensor1" as the new service element host 175 to provide the service element "service1 humidity." At step 234, SEHS 171 sends to proxy gateway 169 a notification of the newly selected service element host 175, which provides one of the service elements. At step 235, proxy gateway 169 confirms receipt of the notification of the change to a general service element host switch (or specific mention of switch to service element host 175) with the current status. The status indicates at what stage proxy gateway 169 receives the service element. In the example, proxy gateway 169 may want to receive the service for a certain time period (e.g., subscribe to each of the individual service element), e.g. 10 minutes. As a result, in the status, proxy gateway 169 informs the time period that it has received the service, e.g., 4 minutes, so 6 minutes remain. At step 236, SEHS 171 sends the service element request with the current service element receiving status from proxy gateway 169 to the newly selected service element host 175.

With continued reference to FIG. 13, at step 237, SEHS 171 sends a service element request cancellation to the old service element host 172. For example, service element host 172 may be "humiditySensor2" as shown in Table 6 and Table 7. At step 238, new service element host 175 provides an unfinished service element to proxy gateway 169. In the example, the service element host 175 ("humiditySensor1") sends the humidity data to proxy gateway 169 for the remaining 6 minutes. At step 239, proxy gateway 169 determines whether it has received a threshold number of service elements (e.g., per time period, per amount, or a combination) from the service element hosts (may be a combination of originally selected and newly selected ones) within a time period. At step 240, after the threshold has been reached, proxy gateway 169 sends a service completion confirmation to SEHS 171. At step 241, SEHS 171 removes the service request from the ongoing list. The removal may be indicative of completion of the service as requested by proxy gateway 169.

FIG. 14 illustrates an exemplary message flow of service element host reselection based on dissatisfaction (e.g., not meeting a minimum threshold) of a client. At step 251, client 270 is alerted to QoS that is reaches an unsatisfactory threshold. The alert may be received based on the configuration of a subscribed triggering event, such as dropped packets or other errors, for example. The alert may have been received for SEHS 171. The QoS may be different from the requirement that the client initially requested. For example, client 170 may have been alerted or otherwise determined that service element host 172 (e.g., "tempSensor1") has not sent the temperature data for some time as expected. The reason may be that the sensor switched to its sleep mode based on a predetermined schedule or may be otherwise unavailable. At step 252, SEHS 171 may receive a request to reselect the service element host for client 170. The request may be indicative of being from client 170 and may include a service element ID. At step 253, based on the request of step 252 SEHS 171 may be triggered to perform reselection of the service element host for the relevant ongoing service. In an example, SEHS 171 may make a change so that service element host 175 (e.g., "tempSensor2") is selected to provide the requested service element instead of service element host 172 (e.g., "tempSensor1").

With continued reference to FIG. 14, at step, SEHS 171 sends client 170 a message that informs of the newly selected service element host 175 for the requested service element (e.g., temperature). At step 255, client 170 may send to service element host 175 a request with regard to obtaining a service element. The request is dispatched directly from client 170 instead of SEHS 171. This direct request is an alternative and different from some other examples discussed herein. At step 256, SEHS 171 sends a message to service element host 172 in order to notify service element host 172 of the cancellation of the service with it. Service element host 172 may respond to SEHS 171 with a confirmation or the like message. Step 257 through step 260 are similar to steps of FIG. 13.

Discussed below are methods with regard to how a SEHS may select multiple candidates of service element hosts based on a client's request such that when a client determines there is a threshold change in QoS (e.g., QoS degradation), the client can be automatically switched to the next candidate. The service request message in Table 3 may have a field added to indicate an option to have one or more candidates for back up. FIG. 15 illustrates an exemplary message flow of service request with multiple candidates of service element hosts. Step 271 and Step 272 are similar to step 201 and step 202 of FIG. 11. At step 273, SEHS 171 may select multiple candidate groups based on the QoS requirement, context information, or the like. In an example, SEHS 171 may select "tempSensor1", "humiditySensor2", "airSensor2" as the first candidate, "tempSensor1", "humiditySensor2", "airSensor3" as the second candidate, and "tempSensor2", "humiditySensor2", "airSensor2" as the third candidate, etc. At step 274, SEHS may put the original service request in the ongoing service list. At step 275, SEHS 171 provides instruction to generate a request for service element. At step 276a, the request for the service element may be dispatched to service element host 172, which may be the first candidate of a plurality of candidates for selection as a service element host to gather service element (e.g., data with regard to temperature, humidity, CO2). At step 276b, SEHS 171 sends a message to client 170. The message may include a confirmation that service element host 172 has been selected. The message may also include a list of multiple candidate groups of service element hosts.

With continued reference to FIG. 15, step 277 through step 278 are similar to step 207 and step 208 of FIG. 11. Step 279 is the similar to step 251 of FIG. 14. At step 280, client 270 sends messages that are associated with switching to another candidate (e.g., third candidate - tempSensor2) as the service element host to provide service element service1.temperature." The message of step 280 may be a cancellation message to service element host 172 with regard to the service element associated with temperature (e.g., tempSensor1). Step 281 through step 285 are similar to step 256 through step 260 of FIG. 14, respectively.

The discussion below considers sequence of service elements, particularly when requesting a service. In other words, service elements of a service may have a predetermined order that should be received by a client in order to get the full service. Discussed below are two exemplary scenarios that request the service elements reach the requesting client in certain order. Considerations with regard to processing order (e.g., reaching out of order, but processing in a certain order) are also contemplated herein, but not spoken to directly below.

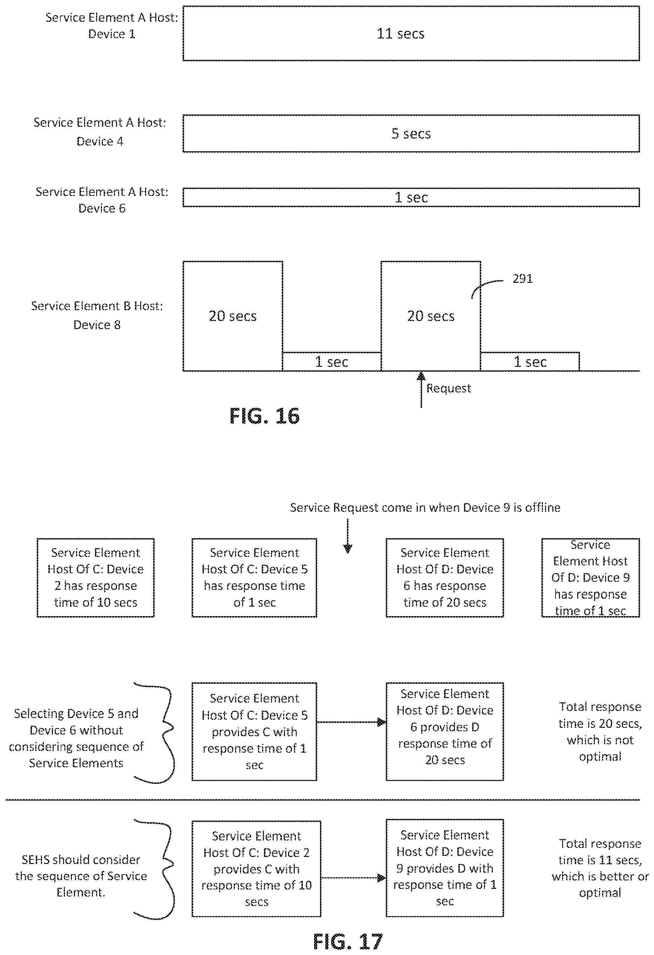

In a first scenario with regard to sequence of service elements, as shown in Table 8 and FIG. 16, a service S1 has 2 service elements: A and B. Service element A has 3 service element hosts labeled Device-1, Device-4, and Device-6. The response times of the three service element hosts are 11 seconds, 5 seconds, and 1 second, respectively. Service element B has one service element host (Device 8), whose response time varies every 10 seconds, in which it is either 20 seconds or 1 second. In this example, the response time is determined at the moment when the service element request comes in and service element A has to be provided before service element B. There may be a request received by SEHS 171 with the QoS requirement of least total response time.

**Table 8: Service Element Information of Exemplary Scenario I**

| Service Element | Number of Service Element Hosts | Service Element Host | Response Time (second) |
|---|---|---|---|
| A | 3 | Device 1 | 11 |
| | | Device 4 | 5 |
| | | Device 6 | 1 |
| B | 1 | Device 8 | 20/1 (changes every 10 seconds) |

With continued consideration of the first scenario with regard to sequence of service elements, if the sequence of service elements were not considered, SEHS 171 would choose Device-6 to deliver service element A since it has the shortest response time among other service element hosts. And since there is only one service element host providing service element B, Device-8 is selected without alternative. If the request comes within Device- 8's inefficient period at block 291 (when its response time is 20 seconds) as shown in FIG. 16, the response time of service element B is 20 seconds. Thus the total response time of the service would be max(1, 20) = 20 seconds if Device-6 is chosen. However in this exemplary first scenario, it is required that the service element A needs to reach the requesting client 170 before service element B. If the same devices are chosen (Device-6 and Device-8), the total response time of the service would be 1+20 = 21 seconds.

With continued consideration of the first scenario with regard to sequence of service elements, the selection of Device-6 and Device-8 is not the most efficient combination of service element hosts when the sequence of the service elements are considered. A more efficient solution may be that SEHS 171 selects Device-1 to provide service element A first. After client 170 receives service element A, the request for service element B is dispatched to Device-8 afterwards. At that time, Device-8 already switches to its efficient period (1 sec), the total response time is 11+1 =12 seconds.

In a second scenario with regard to sequence of service elements, as shown in Table 9 and FIG. 17, a service S2 has 2 service elements: C and D. Service element C has 2 service element hosts labeled Device-2 and Device-5. The response time of the two service element hosts are 10 seconds and 1 sec respectively. Service element D has 2 service element hosts labeled Device-6 and Device-9. The response time of the two service element hosts are 20 seconds and 1 sec, but they have online/offline schedules or sleeping schedules. In this scenario, a request is received by SEHS 171 with the QoS requirement of least total response time. It is also required that service element C has to reach the requesting client 170 before service element D.

With continued reference to the second scenario for sequence of service elements, if SEHS 171 selects Device-5 to provide service element A, after 1 sec, it happens to be Device-6 online but Device-9 offline. When considering the sequence of two service elements, the total response time of the service will be 1 + 20 = 21 seconds. A more efficient selection may be made by SEHS 171, such as allowing Device-2 to provide service element C. After the next 10 seconds when Device-2 finishes providing service element C, Device 9 is online. SEHS 171 has the option to select Device-9 to provide service element D. Thus the total response time of the service would be 10+1 = 11 seconds.

**Table 9: Service Element Information of Exemplary Scenario II**

| Service Element | Number of Service Element Hosts | Service Element Host | Response Time (second) |
|---|---|---|---|
| C | 2 | Device 2 | 10 |
| | | Device 5 | 1 |
| D | 1 | Device 6 | 20 |
| | | Device 9 | 1 |

FIG. 18 is an exemplary illustration in which SEHS may be hosted in a CSE as a oneM2M SEHS CSF 294. oneM2M defines the capabilities supported by the oneM2M Service Layer. The oneM2M Service Layer is instantiated as a capability services entity (CSE) which includes a set of capability service functions (CSF).

Clients 170, which may be an application entity (AE) or CSE, may communicate with the oneM2M SEHS CSF 294 via an Mca or Mcc reference point to request services. oneM2M SEHS CSF 294 may communicate with the underlying network service entities via Mcn reference point to retrieve relevant context information. oneM2M SEHS CSF 294 may communicate with each service element host 172 to dispatch the service requests via an Mca, Mcc/Mcc' reference point.

FIG. 19 is an exemplary illustration of a service request for oneM2M RoA. In this example, the service host is the MN-CSE. AE 301, which is a client, sends service request to SEHS CSF in IN-CSE 302. The context provider may be NSE 303 SEHS in IN-CSE 302 could subscribe to and get notification of (or retrieve) context information from NSE 303. IN-CSE 302 may send and receive service element requests and responses to ASN-CSE 304, which is service element host.

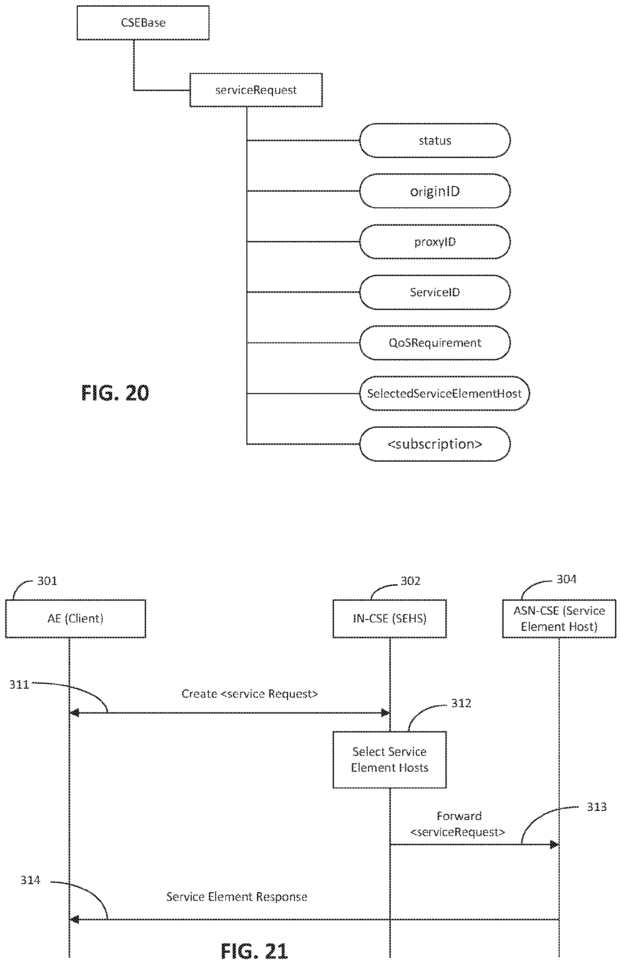

Based on the messages as discussed herein, IN-CSE 302 may maintain the following resource in its resource structure to provide the RESTful interface for the defined procedures: serviceRequest. FIG. 20 is an exemplary illustration of a resource tree structure of <serviceRequest>. Table 10 and Table 11 show the child resource and attributes of the <serviceRequest> resource. Those common attributes can refer to oneM2M-TS-0001 oneM2M Functional Architecture-V-1.6.1 (hereinafter [1]).

**Table 10: Child Resources of <serviceRequest> Resource**

| **Child Resource Type** | **Description** |
|---|---|
| *<subscription>* | See clause 9.6.8 in [1] |

**Table 11: Attributes of <serviceRequest> Resource**

| **Attribute Name** | **Description** |
|---|---|
| *status* | Indicates whether the service request is completed or not. |
| *originID* | Indicates the identifier (URI) of the original service requester. |
| *proxyID* | Indicates the identifier (URI) of the proxy gateway/router of the original service requester. It could also be the Service Host where the original service requester sends service request to. |
| *QoSRequirement* | Indicates the QoS requirement of the service request. |
| *selectedServiceElementHost* | Contains the list of URIs of the selected Service Element Hosts. |

FIG. 21 illustrates an exemplary message flow of the service request in oneM2M. The message flow of FIG. 21 is more simplified than the message flows previously discussed. At step 311, AE 301 (e.g., client 170) creates a <serviceRequest> to send a service request to IN-CSE 302 (e.g., SEHS 171). At step 312, IN-CSE 302 selects the ASN-CSE 304 (e.g., service elements hosts 172) based on the QoS requirement. At step 313, IN-CSE 302 forwards the <serviceRequest> to the ASN-CSE 304. At step 314, ASN-CSE 304 sends the service element response to AE 301.

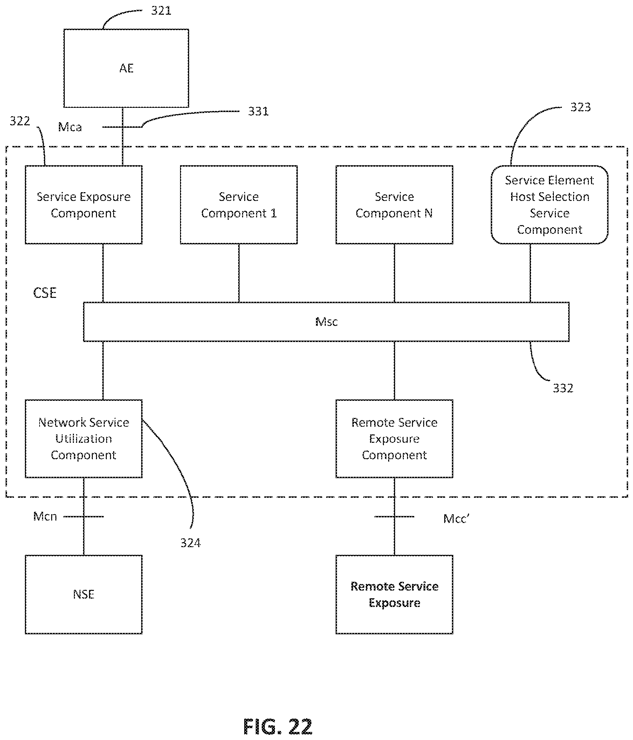

FIG. 22 illustrates an exemplary SEHS in the oneM2M service component architecture (SOA). Service providers in the forms such as AE 321 or remote service exposure components 322 may talk to the service element host selection service component 323 (e.g., SEHS 171) via the Mca reference point 331 or Msc reference point 332 to report and update the service elements and their corresponding service element hosts (e.g., service element hosts 172). Clients (e.g., client 170) in forms such as AE 321 or remote service exposure component 322 may communicate with service element host selection service component 323 via the Mca reference point 331 or Msc reference point 332 to request services. Service element host selection service component 323 will communicate with the underlying network service entities via Msc reference point 332 through network service utilization component 324 (e.g., context provider 174) to retrieve relevant context information. Service element host selection service component 323 may communicate with each service element host to dispatch the service requests via Mca reference point 331 or Msc reference point 332.

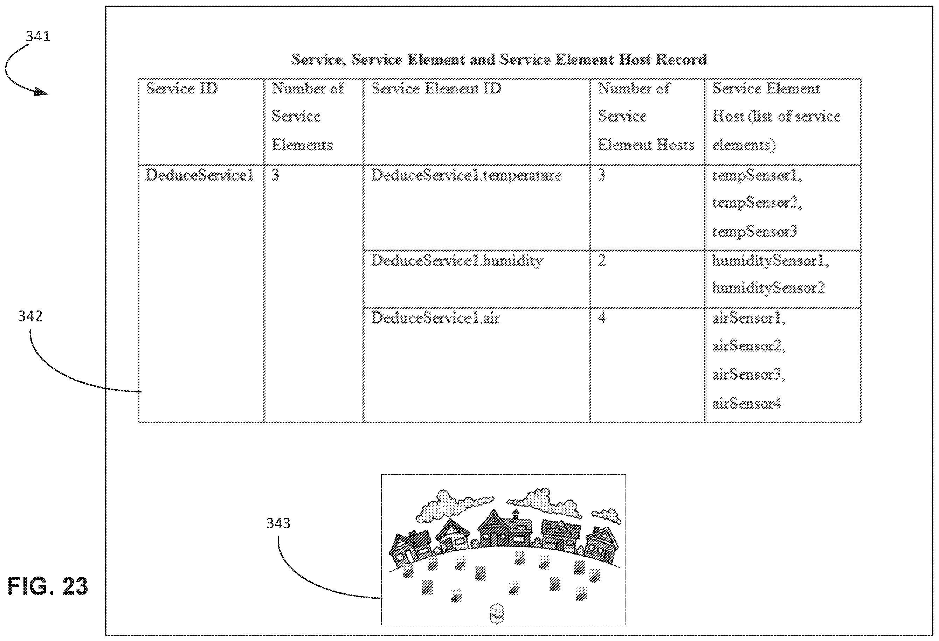

FIG. 23 illustrates an exemplary display (e.g., graphical user interface) that may be generated based on the methods and systems discussed herein. Display interface 341 (e.g., touch screen display) may provide text in block 342 associated with service element host selection, such as the parameters of Table 2 through Table 11. In another example, progress of any of the steps (e.g., sent messages or success of steps - FIG. 9 through FIG. 15 for example) discussed herein may be displayed in block 342. In addition, graphical output 343 may be displayed on display interface 341. Graphical output 3443 may be the topology or graphical mapping of the service element hosts 172 or other service element associated devices (e.g., FIG. 6 - FIG. 7), a graphical output of the progress of any method or systems discussed herein, or the like

FIG. 24A is a diagram of an example machine-to machine (M2M), Internet of Things (IoT), or Web of Things (WoT) communication system 10 in which one or more disclosed concepts associated with systems and methods for service elements that may be implemented, such as FIG. 6 or FIG. 7, among others. Generally, M2M technologies provide building blocks for the IoT/WoT, and any M2M device, M2M gateway or M2M service platform may be a component of the IoT/WoT as well as an IoT/WoT service layer, etc.

As shown in FIG. 24A, the M2M/ IoT/WoT communication system 10 includes a communication network 12. The communication network 12 may be a fixed network (*e.g*., Ethernet, Fiber, ISDN, PLC, or the like) or a wireless network (e.g., WLAN, cellular, or the like) or a network of heterogeneous networks. For example, the communication network 12 may comprise of multiple access networks that provides content such as voice, data, video, messaging, broadcast, or the like to multiple users. For example, the communication network 12 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like. Further, the communication network 12 may comprise other networks such as a core network, the Internet, a sensor network, an industrial control network, a personal area network, a fused personal network, a satellite network, a home network, or an enterprise network for example.

As shown in FIG. 24A, the M2M/ IoT/WoT communication system 10 may include the Infrastructure Domain and the Field Domain. The Infrastructure Domain refers to the network side of the end-to-end M2M deployment, and the Field Domain refers to the area networks, usually behind an M2M gateway. The Field Domain includes M2M gateways 14 and terminal devices 18. It will be appreciated that any number of M2M gateway devices 14 and M2M terminal devices 18 may be included in the M2M/ IoT/WoT communication system 10 as desired. Each of the M2M gateway devices 14 and M2M terminal devices 18 are configured to transmit and receive signals via the communication network 12 or direct radio link. The M2M gateway device 14 allows wireless M2M devices (e.g. cellular and non-cellular) as well as fixed network M2M devices (e.g., PLC) to communicate either through operator networks, such as the communication network 12 or direct radio link. For example, the M2M devices 18 may collect data and send the data, via the communication network 12 or direct radio link, to an M2M application 20 or M2M devices 18. The M2M devices 18 may also receive data from the M2M application 20 or an M2M device 18. Further, data and signals may be sent to and received from the M2M application 20 via an M2M service layer 22, as described below. M2M devices 18 and gateways 14 may communicate via various networks including, cellular, WLAN, WPAN (e.g., Zigbee, 6LoWPAN, Bluetooth), direct radio link, and wireline for example.

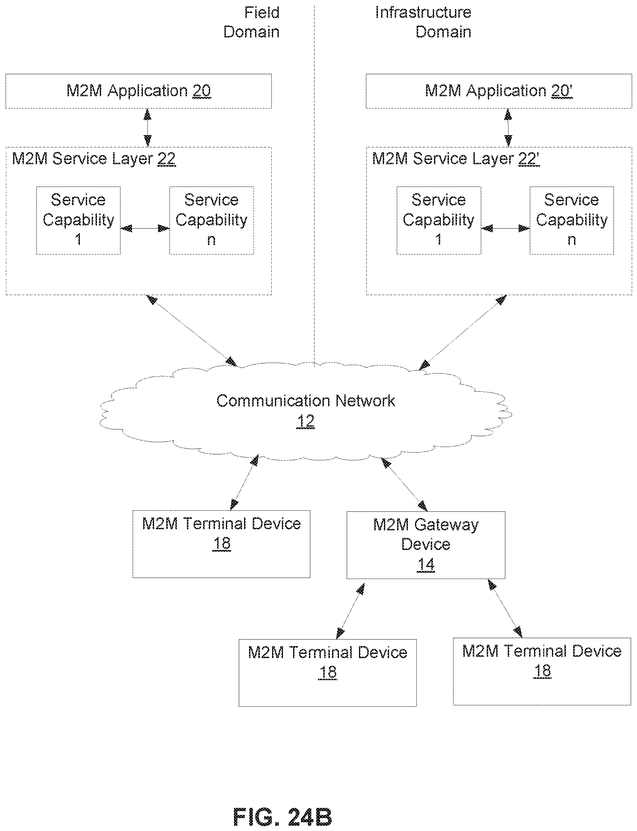

Referring to FIG. 24B, the illustrated M2M service layer 22 in the field domain provides services for the M2M application 20, M2M gateway devices 14, and M2M terminal devices 18 and the communication network 12. It will be understood that the M2M service layer 22 may communicate with any number of M2M applications, M2M gateway devices 14, M2M terminal devices 18, and communication networks 12 as desired. The M2M service layer 22 may be implemented by one or more servers, computers, or the like. The M2M service layer 22 provides service capabilities that apply to M2M terminal devices 18, M2M gateway devices 14 and M2M applications 20. The functions of the M2M service layer 22 may be implemented in a variety of ways, for example as a web server, in the cellular core network, in the cloud, etc.

Similar to the illustrated M2M service layer 22, there is the M2M service layer 22' in the Infrastructure Domain. M2M service layer 22' provides services for the M2M application 20' and the underlying communication network 12' in the infrastructure domain. M2M service layer 22' also provides services for the M2M gateway devices 14 and M2M terminal devices 18 in the field domain. It will be understood that the M2M service layer 22' may communicate with any number of M2M applications, M2M gateway devices and M2M terminal devices. The M2M service layer 22' may interact with a service layer by a different service provider. The M2M service layer 22' may be implemented by one or more senders, computers, virtual machines (e.g., cloud/compute/storage farms, etc.) or the like.

Referring also to FIG. 24B, the M2M service layer 22 and 22' provide a core set of service delivery capabilities that diverse applications and verticals can leverage. These service capabilities enable M2M applications 20 and 20' to interact with devices and perform functions such as data collection, data analysis, device management, security, billing, service/device discovery etc. Essentially, these service capabilities free the applications of the burden of implementing these functionalities, thus simplifying application development and reducing cost and time to market. The service layer 22 and 22' also enables M2M applications 20 and 20' to communicate through various networks 12 and 12' in connection with the services that the service layer 22 and 22' provide.

In some examples, M2M applications 20 and 20' may include desired applications that communicate using service elements, as discussed herein. The M2M applications 20 and 20' may include applications in various industries such as, without limitation, transportation, health and wellness, connected home, energy management, asset tracking, and security and surveillance. As mentioned above, the M2M service layer, running across the devices, gateways, and other servers of the system, supports functions such as, for example, data collection, device management, security, billing, location tracking/geofencing, device/service discovery, and legacy systems integration, and provides these functions as services to the M2M applications 20 and 20'.

The service element host selection of the present application may be implemented as part of a service layer. The service layer is a software middleware layer that supports value-added service capabilities through a set of application programming interfaces (APIs) and underlying networking interfaces. An M2M entity (e.g., an M2M functional entity such as a device, gateway, or service/platform that may be implemented by a combination of hardware and software) may provide an application or service. Both ETSI M2M and oneM2M use a service layer that may contain the service element host selection of the present application. ETSI M2M's service layer is referred to as the Service Capability Layer (SCL). The SCL may be implemented within an M2M device (where it is referred to as a device SCL (DSCL)), a gateway (where it is referred to as a gateway SCL (GSCL)) or a network node (where it is referred to as a network SCL (NSCL)). The oneM2M service layer supports a set of Common Service Functions (CSFs) (i.e. service capabilities). An instantiation of a set of one or more particular types of CSFs is referred to as a Common Services Entity (CSE), which can be hosted on different types of network nodes (e.g. infrastructure node, middle node, application-specific node). Further, the service element host selection of the present application can be implemented as part of an M2M network that uses a Service Oriented Architecture (SOA) or a resource-oriented architecture (ROA) to access services such as the service element host selection of the present application.

As discussed herein, the service layer may be considered a functional layer within a network service architecture. Service layers are typically situated above the application protocol layer such as HTTP, CoAP or MQTT and provide value added services to client applications. The service layer also provides an interface to core networks at a lower resource layer, such as for example, a control layer and transport/access layer. The service layer supports multiple categories of (service) capabilities or functionalities including a service definition, service runtime enablement, policy management, access control, and service clustering. Recently, several industry standards bodies, e.g., oneM2M, have been developing M2M service layers to address the challenges associated with the integration of M2M types of devices and applications into deployments such as the Internet/Web, cellular, enterprise, and home networks. A M2M service layer can provide applications or various devices with access to a collection of or a set of the above mentioned capabilities or functionalities, supported by the service layer, which can be referred to as a CSE or service capability layer (SCL). A few examples include but are not limited to security, charging, data management, device management, discovery, provisioning, and connectivity management which can be commonly used by various applications. These capabilities or functionalities are made available to such various applications via APIs which make use of message formats, resource structures and resource representations defined by the M2M service layer. The CSE or SCL is a functional entity that may be implemented by hardware or software and that provides (service) capabilities or functionalities exposed to various applications or devices (e.g., functional interfaces between such functional entities) in order for them to use such capabilities or functionalities.

FIG. 24C is a system diagram of an example M2M device 30, such as an M2M terminal device 18 (e.g., client 170) or an M2M gateway device 14 (e.g., SEHS 171) for example. As shown in FIG. 24C, the M2M device 30 may include a processor 32, a transceiver 34, a transmit/receive element 36, a speaker/microphone 38, a keypad 40, a display/touchpad 42, non-removable memory 44, removable memory 46, a power source 48, a global positioning system (GPS) chipset 50, and other peripherals 52. It will be appreciated that the M2M device 30 may include any sub-combination of the foregoing elements as far as it falls within the scope of the appended claims. M2M device 30 (e.g., proxy gateway 169, client 170, context provider 174, service element host 172, SEHS 171, and others) may be an exemplary implementation that performs the disclosed apparatus, method and computer-readable storage medium, as far as it falls within the scope of the appended claims.

The processor 32 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 32 may perform signal coding, data processing, power control, input/output processing, or any other functionality that enables the M2M device 30 to operate in a wireless environment. The processor 32 may be coupled to the transceiver 34, which may be coupled to the transmit/receive element 36. While FIG. 24C depicts the processor 32 and the transceiver 34 as separate components, it will be appreciated that the processor 32 and the transceiver 34 may be integrated together in an electronic package or chip. The processor 32 may perform application-layer programs (*e.g*., browsers) or radio access-layer (RAN) programs or communications. The processor 32 may perform security operations such as authentication, security key agreement, or cryptographic operations, such as at the access-layer or application layer for example.

The transmit/receive element 36 may be configured to transmit signals to, or receive signals from, an M2M service platform 22. For example, the transmit/receive element 36 may be an antenna configured to transmit or receive RF signals. The transmit/receive element 36 may support various networks and air interfaces, such as WLAN, WPAN, cellular, and the like. In an example, the transmit/receive element 36 may be an emitter/detector configured to transmit or receive IR, UV, or visible light signals, for example. In yet another example, the transmit/receive element 36 may be configured to transmit and receive both RF and light signals. It will be appreciated that the transmit/receive element 36 may be configured to transmit or receive any combination of wireless or wired signals.

In addition, although the transmit/receive element 36 is depicted in FIG. 24C as a single element, the M2M device 30 may include any number of transmit/receive elements 36. More specifically, the M2M device 30 may employ MIMO technology. Thus, in an example, the M2M device 30 may include two or more transmit/receive elements 36 (e.g., multiple antennas) for transmitting and receiving wireless signals.

The transceiver 34 may be configured to modulate the signals that are to be transmitted by the transmit/receive element 36 and to demodulate the signals that are received by the transmit/receive element 36. As noted above, the M2M device 30 may have multi-mode capabilities. Thus, the transceiver 34 may include multiple transceivers for enabling the M2M device 30 to communicate via multiple RATs, such as UTRA and IEEE 802.11, for example.

The processor 32 may access information from, and store data in, any type of suitable memory, such as the non-removable memory 44 or the removable memory 46. The non-removable memory 44 may include random-access memory (RAM), read-only memory (ROM), a hard disk, or any other type of memory storage device. The removable memory 46 may include a subscriber identity module (SIM) card, a memory stick, a secure digital (SD) memory card, and the like. In other examples, the processor 32 may access information from, and store data in, memory that is not physically located on the M2M device 30, such as on a server or a home computer. The processor 32 may be configured to control lighting patterns, images, or colors on the display or indicators 42 in response to whether the service element host selection in some of the examples described herein are successful or unsuccessful (e.g., service requests, context retrieval, or context notification, etc.), or otherwise indicate a status of service elements and associated components. The control lighting patterns, images, or colors on the display or indicators 42 may be reflective of the status of any of the method flows or components in the Tables or FIG.'s illustrated or discussed herein (e.g., FIG. 6-FIG. 7 and FIG. 11-FIG. 15, FIG. 21, etc.). Disclosed herein are messages and procedures of service elements. The messages and procedures can be extended to provide interface/API for users to request resource-related resources via an input source (e.g., speaker/microphone 38, keypad 40, or display/touchpad 42) and request, configure, or query service element associated information, among other things that may be displayed on display 42.

The processor 32 may receive power from the power source 48, and may be configured to distribute or control the power to the other components in the M2M device 30. The power source 48 may be any suitable device for powering the M2M device 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 32 may also be coupled to the GPS chipset 50, which is configured to provide location information (e.g., longitude and latitude) regarding the current location of the M2M device 30. It will be appreciated that the M2M device 30 may acquire location information by way of any suitable location-determination method while remaining consistent with information disclosed herein.

The processor 32 may further be coupled to other peripherals 52, which may include one or more software or hardware modules that provide additional features, functionality or wired or wireless connectivity. For example, the peripherals 52 may include various sensors such as an accelerometer, biometrics (e.g., figure print) sensors, an e-compass, a satellite transceiver, a sensor, a digital camera (for photographs or video), a universal serial bus (USB) port or other interconnect interfaces, a vibration device, a television transceiver, a hands free headset, a Bluetooth® module, a frequency modulated (FM) radio unit, a digital music player, a media player, a video game player module, an Internet browser, and the like.

The transmit/receive elements 36 may be embodied in other apparatuses or devices, such as a sensor, consumer electronics, a wearable device such as a smart watch or smart clothing, a medical or eHealth device, a robot, industrial equipment, a drone, a vehicle such as a car, truck, train, or airplane. The transmit/receive elements 36 may connect to other components, modules, or systems of such apparatuses or devices via one or more interconnect interfaces, such as an interconnect interface that may comprise one of the peripherals 52.

FIG. 24D is a block diagram of an exemplary computing system 90 on which, for example, the M2M service platform 22 of FIG. 24A and FIG. 24B may be implemented. Computing system 90 (e.g., M2M terminal device 18 or M2M gateway device 14) may comprise a computer or server and may be controlled primarily by computer readable instructions, which may be in the form of software, wherever, or by whatever means such software is stored or accessed. Such computer readable instructions may be executed within central processing unit (CPU) 91 to cause computing system 90 to do work. In many known workstations, servers, and personal computers, central processing unit 91 is implemented by a single-chip CPU called a microprocessor. In other machines, the central processing unit 91 may comprise multiple processors. Coprocessor 81 is an optional processor, distinct from main CPU 91, that performs additional functions or assists CPU 91. CPU 91 or coprocessor 81 may receive, generate, and process data related to the disclosed systems and methods for service elements, such as receiving service requests, context notification, or service elements, among other things as discussed herein.

In operation, CPU 91 fetches, decodes, and executes instructions, and transfers information to and from other resources via the computer's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memory devices coupled to system bus 80 include random access memory (RAM) 82 and read only memory (ROM) 93. Such memories include circuitry that allows information to be stored and retrieved. ROMs 93 generally contain stored data that cannot easily be modified. Data stored in RAM 82 can be read or changed by CPU 91 or other hardware devices. Access to RAM 82 or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode can access only memory mapped by its own process virtual address space; it cannot access memory within another process's virtual address space unless memory sharing between the processes has been set up.

In addition, computing system 90 may contain peripherals controller 83 responsible for communicating instructions from CPU 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. Display 86 may be implemented with a CRT-based video display, an LCD-based flat-panel display, gas plasma-based flat-panel display, or a touch-panel. Display controller 96 includes electronic components required to generate a video signal that is sent to display 86.

Further, computing system 90 may contain network adaptor 97 that may be used to connect computing system 90 to an external communications network, such as network 12 of FIG. 24A and FIG. 24B.

It is understood that any or all of the systems, methods and processes described herein may be embodied in the form of computer executable instructions (*i.e.,* program code) stored on a computer-readable storage medium which instructions, when executed by a machine, such as a computer, server, M2M terminal device, M2M gateway device, or the like, perform or implement the systems, methods and processes described herein. Specifically, any of the steps, operations or functions described above may be implemented in the form of such computer executable instructions. Computer readable storage media include both volatile and nonvolatile, removable and non-removable media implemented in any method or technology for storage of information, but such computer readable storage media do not includes signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other physical medium which can be used to store the desired information and which can be accessed by a computer.

In describing preferred methods, systems, or apparatuses of the subject matter of the present disclosure - service element host selection - as illustrated in the Figures, specific terminology is employed for the sake of clarity. The claimed subject matter, however, is not intended to be limited to the specific terminology so selected, and it is to be understood that each specific element includes all technical equivalents that operate in a similar manner to accomplish a similar purpose.

The various techniques described herein may be implemented in connection with hardware, firmware, software or, where appropriate, combinations thereof. Such hardware, firmware, and software may reside in apparatuses located at various nodes of a communication network. As used herein, the terms "apparatus," "network apparatus," "node," "device," "network node," or the like may be used interchangeably.

This written description uses examples to disclose the invention, including the best mode, and also to enable any person skilled in the art to practice the invention. The patentable scope of the invention is defined by the claims, and may include other examples that occur to those skilled in the art, as far as they fall within the scope of the appended claims.

## Claims

1. An apparatus for managing service element host selection, the apparatus comprising:
a processor; and
a memory coupled with the processor, the memory comprising executable instructions that when executed by the processor cause the processor to effectuate operations comprising:
receiving a message comprising a request for a service and a quality of service requirement, wherein the service comprises a plurality of service elements that are individual components that are used to provide the service;
determining each service element host for each service element of the plurality of service elements based on the message; and
forwarding the request to each service element host.

2. The apparatus of claim 1, wherein the message comprises an identifier of the service.

3. The apparatus of claim 1, wherein the message is indicative of being from a service host, wherein the service host announces the service and provides interfaces for clients to access the service.

4. The apparatus of claim 1, wherein the message comprises a number of service elements the service is composed of.

5. The apparatus of claim 1, wherein a message is sent from the apparatus to a context provider requesting a distance from the requestor of the service to each service element host.

6. The apparatus of claim 1, wherein the message comprises an indicator of a sequence of processing a first service element for a first service.

7. The apparatus of claim 1, wherein the first service element is temperature data.

8. A method for an apparatus for managing service element host selection, the method comprising:
receiving a message comprising a request for a service, wherein the service comprises a plurality of service elements that are individual components that are used to provide the service;
determining each service element host for each service element of the plurality of service elements based on the message; and
forwarding the request to each service element host.

9. The method of claim 8, wherein the message comprises an identifier of the service.

10. The method of claim 8, wherein the message is indicative of being from a service host, wherein the service host announces the service and provides interfaces for clients to access the service.

11. The method of claim 8, wherein the message comprises a number of service elements the service is composed of.

12. The method of claim 8, wherein a message is sent from said apparatus to a context provider requesting a distance from the requestor of the service to each service element hos.

13. The method of claim 8, wherein the message comprises an indicator of a sequence of processing a first service element for the first service.

14. The method of claim 8, wherein the first service element is temperature data.

15. A computer-readable storage medium having a computer program stored thereon, the computer program being loadable into a data-processing unit and adapted to cause the data-processing unit to execute method steps according to any of claims 8 to 14 when the computer program is run by the data-processing unit.

## Patentansprüche

1. Einrichtung zum Verwalten einer Dienstelement-Hostauswahl, wobei die Einrichtung Folgendes umfasst:
einen Prozessor; und
einen Speicher, der mit dem Prozessor gekoppelt ist, wobei der Speicher ausführbare Anweisungen umfasst, die bei Ausführung durch den Prozessor bewirken, dass der Prozessor Operationen umsetzt, die Folgendes umfassen:
Empfangen einer Nachricht, die eine Anforderung für einen Dienst und ein Dienstgüteerfordernis umfasst, wobei der Dienst mehrere Dienstelemente umfasst, bei denen es sich um einzelne Komponenten handelt, die zum Bereitstellen des Dienstes verwendet werden;
Bestimmen jedes Dienstelement-Hosts für jedes Dienstelement der mehreren Dienstelemente basierend auf der Nachricht; und
Weiterleiten der Anforderungen an jeden Dienstelement-Host.

2. Einrichtung nach Anspruch 1, wobei die Nachricht eine Kennung des Dienstes umfasst.

3. Einrichtung nach Anspruch 1, wobei die Nachricht darauf hinweist, dass sie von einem Dienst-Host stammt, wobei der Dienst-Host den Dienst ankündigt und Schnittstellen für Clients zum Zugriff auf den Dienst bereitstellt.

4. Einrichtung nach Anspruch 1, wobei die Nachricht eine Anzahl von Dienstelementen, aus denen der Dienst besteht, umfasst.

5. Einrichtung nach Anspruch 1, wobei eine Nachricht von der Einrichtung an einen Kontextanbieter gesendet wird, mit der eine Distanz von dem Anforderer des Dienstes zu jedem Dienstelement-Host angefordert wird.

6. Einrichtung nach Anspruch 1, wobei die Nachricht einen Indikator einer Sequenz einer Verarbeitung eines ersten Dienstelements für einen ersten Dienst umfasst.

7. Einrichtung nach Anspruch 1, wobei es sich bei dem ersten Dienstelement um Temperaturdaten handelt.

8. Verfahren für eine Einrichtung zum Verwalten einer Dienstelement-Hostauswahl, wobei das Verfahren Folgendes umfasst:
Empfangen einer Nachricht, die eine Anforderung für einen Dienst umfasst, wobei der Dienst mehrere Dienstelemente umfasst, bei denen es sich um einzelne Komponenten handelt, die zum Bereitstellen des Dienstes verwendet werden;
Bestimmen jedes Dienstelement-Hosts für jedes Dienstelement der mehreren Dienstelemente basierend auf der Nachricht; und
Weiterleiten der Anforderungen an jeden Dienstelement-Host.

9. Verfahren nach Anspruch 8, wobei die Nachricht eine Kennung des Dienstes umfasst.

10. Verfahren nach Anspruch 8, wobei die Nachricht darauf hinweist, dass sie von einem Dienst-Host stammt, wobei der Dienst-Host den Dienst ankündigt und Schnittstellen für Clients zum Zugriff auf den Dienst bereitstellt.

11. Verfahren nach Anspruch 8, wobei die Nachricht eine Anzahl von Dienstelementen, aus denen der Dienst besteht, umfasst.

12. Verfahren nach Anspruch 8, wobei eine Nachricht von der Einrichtung an einen Kontextanbieter gesendet wird, mit der eine Distanz von dem Anforderer des Dienstes zu jedem Dienstelement-Host angefordert wird.

13. Verfahren nach Anspruch 8, wobei die Nachricht einen Indikator einer Sequenz einer Verarbeitung eines ersten Dienstelements für einen ersten Dienst umfasst.

14. Verfahren nach Anspruch 8, wobei es sich bei dem ersten Dienstelement um Temperaturdaten handelt.

15. Computerlesbares Speichermedium mit einem darauf gespeicherten Computerprogramm, wobei das Computerprogramm in eine Datenverarbeitungseinheit geladen werden kann und dazu eingerichtet ist, zu bewirken, dass die Datenverarbeitungseinheit Verfahrensschritte nach einem der Anspruch 8 bis 14 ausführt, wenn das Computerprogramm durch die Datenverarbeitungseinheit ausgeführt wird.

## Revendications

1. Appareil de gestion d'une sélection d'hôte d'élément de service, l'appareil comprenant :
un processeur ; et
une mémoire couplée au processeur, la mémoire comprenant des instructions exécutables qui, lorsqu'elles sont exécutées par le processeur, amènent le processeur à effectuer des opérations consistant à :
recevoir un message qui comprend une demande concernant un service et une exigence de qualité de service, le service comprenant une pluralité d'éléments de service qui sont des composants individuels qui sont utilisés pour fournir le service ;
sur la base du message, déterminer chaque hôte d'élément de service pour chaque élément de service de la pluralité d'éléments de service ; et
transférer la demande à chaque hôte d'élément de service.

2. Appareil selon la revendication 1, dans lequel le message comprend un identifiant du service.

3. Appareil selon la revendication 1, dans lequel le message indique s'il provient d'un hôte de service, l'hôte de service annonçant le service et fournissant des interfaces à des clients pour accéder au service.

4. Appareil selon la revendication 1, dans lequel le message comprend un nombre d'éléments de service dont le service est composé.

5. Appareil selon la revendication 1, dans lequel un message est envoyé par l'appareil à un fournisseur de contexte, le message demandant une distance depuis le demandeur du service jusqu'à chaque hôte d'élément de service.

6. Appareil selon la revendication 1, dans lequel le message comprend un indicateur d'une séquence de traitement d'un premier élément de service pour un premier service.

7. Appareil selon la revendication 1, dans lequel le premier élément de service est des données de température.

8. Procédé pour un appareil de gestion d'une sélection d'hôte d'élément de service, le procédé comprenant les étapes consistant à :
recevoir un message qui comprend une demande concernant un service, le service comprenant une pluralité d'éléments de service qui sont des composants individuels qui sont utilisés pour fournir le service ;
sur la base du message, déterminer chaque hôte d'élément de service pour chaque élément de service de la pluralité d'éléments de service ; et
transférer la demande à chaque hôte d'élément de service.

9. Procédé selon la revendication 8, dans lequel le message comprend un identifiant du service.

10. Procédé selon la revendication 8, dans lequel le message indique s'il provient d'un hôte de service, l'hôte de service annonçant le service et fournissant des interfaces à des clients pour accéder au service.

11. Procédé selon la revendication 8, dans lequel le message comprend un nombre d'éléments de service dont le service est composé.

12. Procédé selon la revendication 8, dans lequel un message est envoyé par ledit appareil à un fournisseur de contexte, le message demandant une distance depuis le demandeur du service jusqu'à chaque hôte d'élément de service.

13. Procédé selon la revendication 8, dans lequel le message comprend un indicateur d'une séquence de traitement d'un premier élément de service pour le premier service.

14. Procédé selon la revendication 8, dans lequel le premier élément de service est des données de température.

15. Support de stockage lisible par ordinateur sur lequel est stocké un programme informatique, le programme informatique pouvant être chargé dans une unité de traitement de données et étant conçu pour amener l'unité de traitement de données à exécuter les étapes de procédé selon l'une quelconque des revendications 8 à 14 quand le programme informatique est exécuté par l'unité de traitement de données.
